(19) **Europäisches Patentamt / European Patent Office / Office européen des brevets**

(11) **EP 4 042 528 B1**

(12) **EUROPEAN PATENT SPECIFICATION**

(45) Date of publication and mention of the grant of the patent:
**27.03.2024   Bulletin 2024/13**

(21) Application number: **21866172.6**

(22) Date of filing: **06.09.2021**

(51) International Patent Classification (IPC):
*H01S 3/113* (2006.01)       *H01S 3/06* (2006.01)
*G01S 7/481* (2006.01)       *G01S 17/10* (2020.01)
*C04B 35/00* (2006.01)       *C04B 35/44* (2006.01)
*C04B 35/495* (2006.01)     *H01S 3/04* (2006.01)
*H01S 3/042* (2006.01)       *H01S 3/08* (2023.01)
*H01S 3/092* (2006.01)       *H01S 3/0941* (2006.01)
*H01S 3/16* (2006.01)         *H01S 3/23* (2006.01)

(52) Cooperative Patent Classification (CPC):
**H01S 3/113; C04B 35/44; C04B 35/495; G01S 7/4814; G01S 17/10; H01S 3/0612; H01S 3/08095; H01S 3/0941; H01S 3/1611; H01S 3/1643;** C04B 2235/3225; C04B 2235/3239; C04B 2235/764; C04B 2235/77; H01S 3/0405;

(Cont.)

(86) International application number:
**PCT/IB2021/058089**

(87) International publication number:
**WO 2022/053924 (17.03.2022 Gazette 2022/11)**

(54) **NOVEL PASSIVELY Q-SWITCHED LASER**

NEUARTIGER PASSIV GÜTEGESCHALTETER LASER

LASER DÉCLENCHÉ PASSIVEMENT INNOVANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **08.09.2020   US 202063075426 P**
                **11.11.2020   US 202063112416 P**
                **22.06.2021   US 202163213419 P**

(43) Date of publication of application:
**17.08.2022   Bulletin 2022/33**

(60) Divisional application:
**23191787.3 / 4 257 573**

(73) Proprietor: **Trieye Ltd.**
**6789155 Tel Aviv (IL)**

(72) Inventors:
• **SHALIBO, Yoni**
  **5591188 Ganey Tikva (IL)**
• **KHATSEVICH, Stanislav**
  **4232761 Netanya (IL)**
• **BAKAL, Avraham**
  **6513507 Tel Aviv (IL)**
• **KAPACH, Omer**
  **9738008 Jerusalem (IL)**
• **LEVY, Uriel**
  **5552507 Kiryat Ono (IL)**
• **DANAN, Ariel**
  **6513507 Tel Aviv (IL)**

(74) Representative: **Kasche & Partner**
**Bühlstrasse 1**
**8125 Zollikerberg/Zürich (CH)**

(56) References cited:
**US-A- 5 557 624        US-A- 5 802 083**
**US-A- 5 832 008        US-A- 5 832 010**
**US-A- 6 023 479        US-A1- 2014 010 247**
**US-A1- 2015 117 476    US-A1- 2015 280 392**
**US-A1- 2020 076 152**

EP 4 042 528 B1

- SPARIOSU K ET AL: "ER:CA5(PO4)3F SATURABLE-ABSORBER Q SWITCH FOR THE ER:GLASS LASER AT 1.53 UM", APPLIED PHYSICS LETTERS, AMERICAN INSTITUTE OF PHYSICS, 2 HUNTINGTON QUADRANGLE, MELVILLE, NY 11747, vol. 62, no. 22, 31 May 1993 (1993-05-31), pages 2763-2765, XP000380903, ISSN: 0003-6951, DOI: 10.1063/1.109253
- HUANG H T ET AL: "Co2+:LMA crystal as saturable absorber for a diode-pumped passively Q-switched Nd:YVO4 laser at 1342 nm", APPLIED PHYSICS B ; LASERS AND OPTICS, SPRINGER, BERLIN, DE, vol. 89, no. 2-3, 7 October 2007 (2007-10-07), pages 319-321, XP019562071, ISSN: 1432-0649, DOI: 10.1007/S00340-007-2790-8
- LI P. ET AL: "Directly LD-pumped passively Q-switched YVO4-Nd:YVO4 laser at 1.34 [mu]m with a V3+: YAG saturable absorber", LASER PHYSICS, vol. 20, no. 10, 2 September 2010 (2010-09-02), pages 1861-1864, XP055981887, RU ISSN: 1054-660X, DOI: 10.1134/S1054660X10190096 Retrieved from the Internet: URL:http://link.springer.com/article/10.11 34/S1054660X10190096/fulltext.html>
- XU J.-L. ET AL: "Dual-wavelength oscillation at 1064 and 1342 nm in a passively Q-switched Nd:YVO4 laser with V3+:YAG as saturable absorber", APPLIED PHYSICS B, vol. 103, no. 1, 6 November 2010 (2010-11-06), pages 75-82, XP055981931, Berlin/Heidelberg ISSN: 0946-2171, DOI: 10.1007/s00340-010-4288-z Retrieved from the Internet: URL:http://link.springer.com/article/10.10 07/s00340-010-4288-z/fulltext.html>
- BAI Y ET AL: "PASSIVELY Q-SWITCHED ND:YVO4 LASER WITH A CR4+:YAG CRYSTAL SATURABLE ABSORBER", APPLIED OPTICS, OPTICAL SOCIETY OF AMERICA, WASHINGTON, DC, US, vol. 36, no. 12, 20 April 1997 (1997-04-20), pages 2468-2472, XP000656441, ISSN: 0003-6935, DOI: 10.1364/AO.36.002468
- ZHOU HAI QIONG ET AL: "Multi-wavelength passively Q-switched red lasers with Nd3+:YAG/YAG/V3+:YAG/YAG composite crystal", OPTICAL AND QUANTUM ELECTRONICS, SPRINGER US, NEW YORK, vol. 50, no. 2, 16 January 2018 (2018-01-16), pages 1-11, XP036443396, ISSN: 0306-8919, DOI: 10.1007/S11082-018-1326-2 [retrieved on 2018-01-16]

(52) Cooperative Patent Classification (CPC): (Cont.)
H01S 3/042; H01S 3/0604; H01S 3/0627;
H01S 3/08; H01S 3/092; H01S 3/09415;
H01S 3/1685; H01S 3/2325

**Description**

RELATED APPLICATIONS

This application claims priority from U.S. provisional patent applications No. 63/075,426 filed September 8, 2020, 63/112,416 filed November 11, 2020, and 63/213,419 filing date June 22, 2021.

FIELD

The disclosure is related to passively Q-switched lasers and methods for operation and manufacture thereof, and especially to passively Q-switched lasers which include ceramic crystalline materials.

BACKGROUND

Lasers operating in the short-wave infrared (SWIR) part of the electromagnetic spectrum can be hard to manufacture in high volumes, especially if low production costs are required. There is therefore a need in the art for passively Q-switched SWIR lasers which can be produced in low costs and in large numbers.

Further limitations and disadvantages of conventional, traditional, and proposed approaches will become apparent to one of skill in the art, through comparison of such approaches with the subject matter of the present application as set forth in the remainder of the present application with reference to the drawings.

A flashlamp side-pumped passively Q-switched laser resonator with a curved highly reflective resonator mirror is disclosed in either of SPARIOSU K ET AL: "ER:CA5(PO4)3F SATURABLE-ABSORBER Q SWITCH FOR THE ER:GLASS LASER AT 1.53 UM",APPLIED PHYSICS LETTERS, AMERICAN INSTITUTE OF PHYSICS, 2 HUNTINGTON QUADRANGLE, MELVILLE, NY 11747, vol. 62, no. 22, 31 May 1993 (1993-05-31), pages 2763-2765; or US 5 802 083 A.

Each of HUANG H T ET AL: "Co2+:LMA crystal as saturable absorber for a diode-pumped passively Q-switched Nd:YVO4 laser at 1342 nm",APPLIED PHYSICS B ; LASERS AND OPTICS, SPRINGER, BERLIN, DE, vol. 89, no. 2-3, 7 October 2007, pages 319-321; or

Li P. ET AL: "Directly LD-pumped passively Q-switched YVO4-Nd:YVO4 laser at 1.34 $\mu$m with a V3+: YAG saturable absorber",LASER PHYSICS, vol. 20, no. 10, 2 September 2010, pages 1861-1864; or

Xu J.-L. ET AL: "Dual-wavelength oscillation at 1064 and 1342 nm in a passively Q-switched Nd:YVO4 laser with V3+:YAG as saturable absorber",Applied Physics B, vol. 103, no. 1, 6 November 2010, pages 75-82; or

BAI Y ET AL: "PASSIVELY Q-SWITCHED ND:YVO4 LASER WITH A CR4+:YAG CRYSTAL SATURABLE ABSORBER",APPLIED OPTICS, OPTICAL SOCIETY OF AMERICA,

WASHINGTON, DC, US, vol. 36, no. 12, 20 April 1997, pages 2468-2472, discloses a diode laser end-pumped passively Q-switched laser resonator with a curved highly reflective resonator mirror.

Either of US 6 023 479 A and US 5 832 010 A discloses a diode end-pumped passively Q-switched monolithic microchip laser with at least one curved resonator mirror.

In order to understand the disclosure and to see how it may be carried out in practice, embodiments will now be described, by way of non-limiting examples only, with reference to the accompanying drawings. It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

SUMMARY

The invention is defined in independent claim 1. Preferred embodiments of the invention are set out in the dependent claims.

In various embodiments, there are provided passively Q-switched lasers, comprising: a gain medium (GM) having a stimulated emission cross section $\sigma_{SE}$; a saturable absorber (SA) having an absorption cross section ($\sigma_a$) which is less than three times the $\sigma_{SE}$ of the GM; and an optical resonator within which the GM and the SA are positioned, the optical resonator comprising a high reflectivity mirror and an output coupler, wherein at least one of the high reflectivity mirror and the output coupler comprises a curved mirror, directing light within the optical resonator such that an effective cross-section of a laser mode within the SA ($A_{SA}$) is smaller than a cross-section of a laser mode within a Rayleigh length of the pump ($A_{GM}$).

In some embodiments, the GM is made of neodymium-doped yttrium aluminum garnet (Nd:YAG) and the SA is made from cobalt-doped YAG (Co$^{2+}$:YAG).

In some embodiments, the GM is made of neodymium-doped yttrium orthovanadate ($YVO_4$), and the SA is made from three-valence vanadium-doped yttrium aluminum garnet ($V^{3+}$:YAG).

In some embodiments, the GM is made of neodymium-doped yttrium orthovanadate ($YVO_4$) and the SA is made from cobalt-doped YAG ($Co^{2+}$:YAG).

In accordance with the invention the high reflectivity mirror and the output coupler are rigidly coupled to the GM and the SA, such that the passively Q-switched laser is a monolithic microchip passively Q-switched laser.

In some embodiments, the high reflectivity mirror is a concave mirror.

In some embodiments, both of the high reflectivity mirror and the output coupler are concave mirrors. In some embodiments, the curvatures of the concave high reflectivity mirror and of the concave output coupler are such that the highest energy density is within the middle 60% of the optical resonator.

In some embodiments, a diameter of the SA is smaller than a diameter of the GM, wherein the SA is surrounded by another material for releasing heat from the optical resonator.

In accordance with the invention, the passively Q-switched laser further includes at least one end-pumping light source and, in some embodiments optics for focusing light of the diode pump light source into the optical resonator.

In some embodiments, the GM and the SA are polycrystalline materials.

In some embodiments, the passively Q-switched laser further includes undoped YAG in addition to the GM and to the SA, for preventing heat from accumulating in an absorptive region of the GM.

In some embodiments, the GM and the SA are implemented on a single piece of crystalline material doped with neodymium and with at least one other material.

In some embodiments, the passively Q-switched laser emits light through the output coupler within the wavelengths range of 1,300nm and 1,500nm.

In some embodiments, there is disclosed a SWIR electrooptical system, including the passively Q-switched laser according to any one of the previous paragraphs, and further including a SWIR photodetector array sensitive to the wavelength of the laser, for detecting reflections of laser illumination off at least one illuminated object.

In some embodiments, there is disclosed a SWIR electrooptical system, including the passively Q-switched laser according to any one of the previous paragraphs, and further including a time of flight (ToF) SWIR sensor sensitive to the wavelength of the laser, a controller operable to synchronize operation of the ToF SWIR sensor and the passively Q-switched laser, and a processor operable to process detections by the ToF SWIR sensor of reflections of laser illumination of the passively Q-switched laser, for determining a distance to at least one object in the field of view of the SWIR electrooptical system.

BRIEF DESCRIPTION OF THE DRAWINGS

In order to understand the disclosure and to see how it may be carried out in practice, embodiments will now be described, by way of non-limiting examples only and in accordance with examples of the presently disclosed subject matter, with reference to the accompanying drawings, in which:

FIG. 1 is a schematic functional block diagram illustrating an example not in accordance with the claimed invention of a short-wave infrared (SWIR) optical system;

FIGS. 2A, 2B, and 2C are schematic functional block diagrams illustrating examples not in accordance with the claimed invention of a passively Q-switched laser;

FIG. 3 is a schematic functional diagram illustrating an exemplary implementation of a SWIR optical system not in accordance with the claimed invention;

FIG. 4 is a schematic functional diagram illustrating another exemplary implementation of a SWIR optical system not in accordance with the claimed invention;

FIG. 5A is a schematic functional block diagram illustrating an embodiment in accordance with the claimed invention of a SWIR optical system;

FIG. 5B is a schematic functional block diagram illustrating an embodiment in accordance with the claimed invention of a SWIR optical system;

FIG. 6A is a flow chart illustrating an example of a method for manufacturing parts for a passively Q-switched laser in accordance with the claimed invention;

FIGS. 6B and 6C include several conceptual timelines for the execution of the aforementioned method;

FIGS. 7A-7C are schematic functional block diagrams illustrating examples of a passively Q-switched lasers in accordance with the claimed invention;

FIGS. 8A-8C are schematic functional block diagrams illustrating examples of passively Q-switched lasers in accordance with the claimed invention including at least one concave mirror:

FIG. 9A is a schematic functional block diagram illustrating an example of an electrooptical system with an end-pumped passively Q-switched laser in accordance with the claimed invention;

FIG. 9B is a schematic functional block diagram illustrating an example of an electrooptical system with a side-pumped passively Q-switched laser not in accordance with the claimed invention;

FIGS. 10A and 10B are schematic functional block diagrams illustrating examples in accordance with the claimed invention of electrooptical systems;

FIG. 11 shows in an exploded-view perspective projections of a GM amplifier;

FIG. 12 shows in an exploded-view perspective projections of another GM amplifier;

FIG. 13 illustrates an amplified laser illumination source;

FIG. 14 illustrates another amplified laser illumination source.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

DETAILED DESCRIPTION

In the following detailed description, numerous specific details are set forth in order to provide a thorough understanding of the disclosure. However, it will be understood by those skilled in the art that the present disclosure may be practiced without these specific details. In other instances, well-known methods, procedures, and components have not been described in detail so as not to obscure the present disclosure.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "processing", "calculating", "computing", "determining", "generating", "setting", "configuring", "selecting", "defining", or the like, include action and/or processes of a computer that manipulate and/or transform data into other data, said data represented as physical quantities, e.g. such as electronic quantities, and/or said data representing the physical objects.

The terms "computer", "processor", and "controller" should be expansively construed to cover any kind of electronic device with data processing capabilities, including, by way of non-limiting example, a personal computer, a server, a computing system, a communication device, a processor (e.g. digital signal processor (DSP), a microcontroller, a field programmable gate array (FPGA), an application specific integrated circuit (ASIC), etc.), any other electronic computing device, and or any combination thereof.

The operations in accordance with the teachings herein may be performed by a computer specially constructed for the desired purposes or by a general-purpose computer specially configured for the desired purpose by a computer program stored in a computer readable storage medium.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure, or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

In embodiments of the presently disclosed subject matter one or more stages illustrated in the figures may be executed in a different order and/or one or more groups of stages may be executed simultaneously and vice versa. The figures illustrate a general schematic of the system architecture in accordance with an embodiment of the presently disclosed subject matter. Each module in the figures can be made up of any combination of software, hardware and/or firmware that performs the functions as defined and explained herein. The modules in the figures may be centralized in one location or dispersed over more than one location.

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

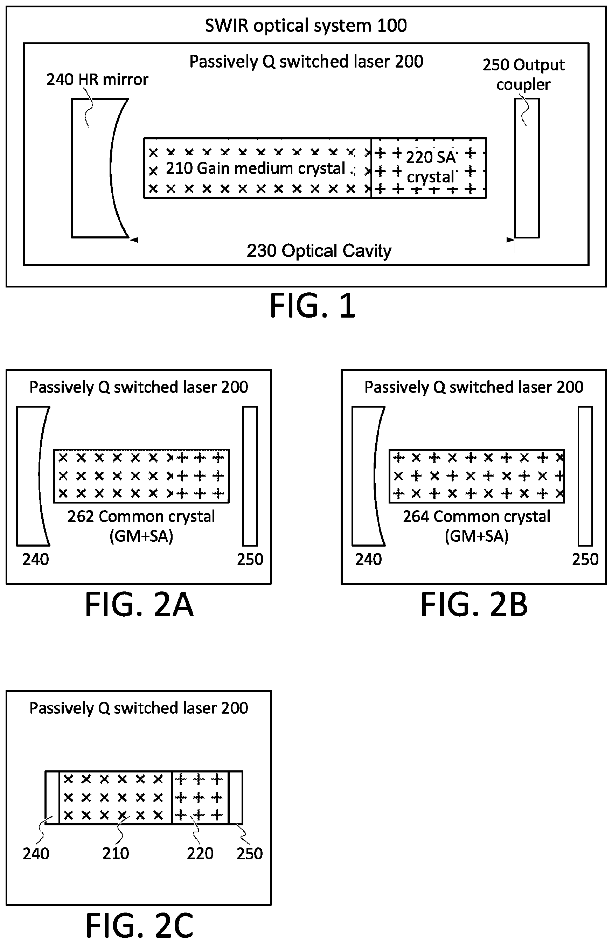

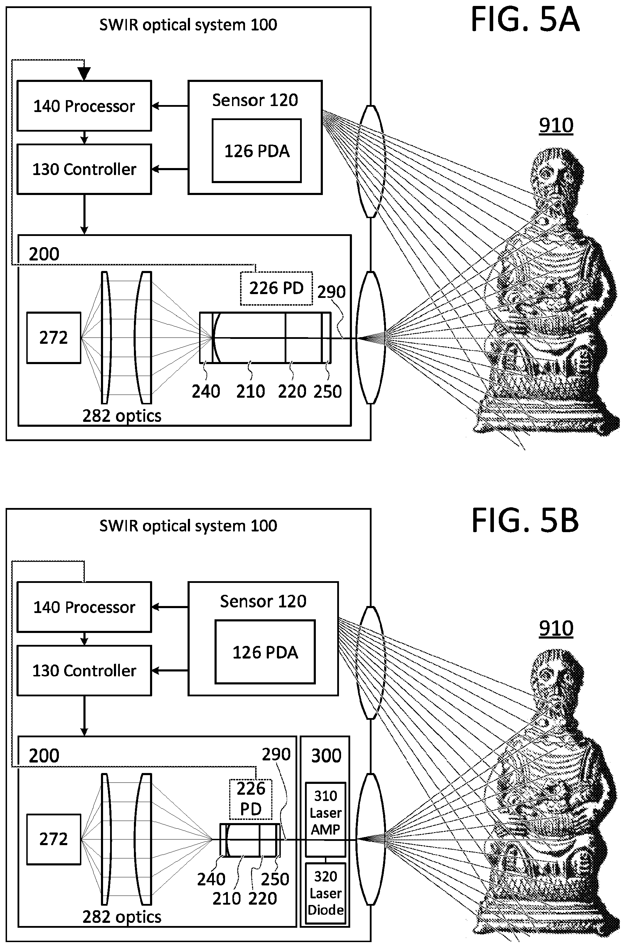

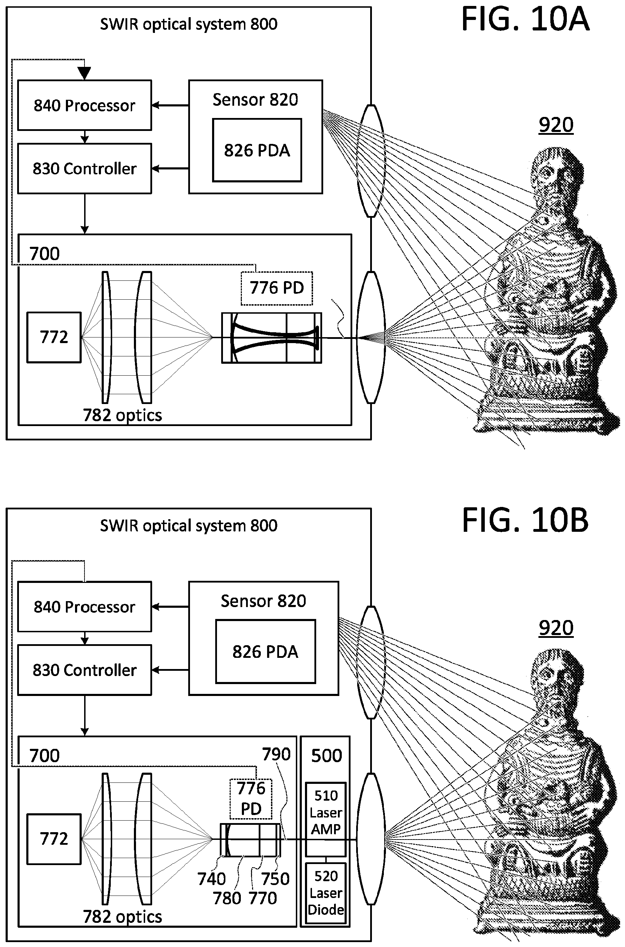

FIG. 1 is a schematic functional block diagram illustrating an example of short-wave infrared (SWIR) optical system 100, in accordance with examples of the presently disclosed subject matter. It is noted that there is no scientific consensus about the range of wavelengths which are considered part of the SWIR spectrum. Nevertheless, for the purposes of the present disclosure, the SWIR spectrum includes electromagnetic radiation in wavelengths which are longer than that of the visible spectrum, and which include at the very least the spectral range between 1,300 and 1,500nm. SWIR optical system 100 illustrated in FIG. 1 includes at least a passively Q-switched laser 200, but may also include additional components such as corresponding sensor (for sensing light of the laser reflected from external objects), processor (for processing sensing results), controller (for controlling activity of the laser, e.g., for synching its operation with that of the laser), and so on. Some such examples are discussed in further details below (e.g., with respect to FIGS. 5A, 5B, and 10).

The only industry that has required high volumes of lasers in the aforementioned spectral range (1.3-1.5μm) is the electronics industry for optical data storage, which drove the diode laser cost down to dollars, or less, per device, per Watt. However, those lasers are not suitable for other industries such as the automotive industry, which requires lasers with considerably greater peak power and beam brightness, and which will be utilized in harsh environmental conditions.

Passively Q-switched laser 200 includes at least a crystalline GM 210, a crystalline SA 220, and an optical cavity 230 in which the aforementioned crystalline materials are confined, in order to allow light propagating within the GM to intensify towards producing a laser light beam. Optical cavity 230 is also known by the terms "optical resonator" and "resonating cavity", and it includes a high reflectivity mirror 240 (also referred to as "high reflector") and an output coupler 250. Discussed below are several unique and novel combinations of crystalline materials of different types, and using varied manufacturing techniques of the lasers, which allow for high volume manufacturing of reasonably priced lasers for the SWIR spectral range. General details which are generally known in the art with respect to passively Q-switched lasers are not provided here for reasons of conciseness of the disclosure, but are readily available for wide variety of sources. The SA of the laser serves as the Q-switch for the laser, as is known in the art. The term "crystalline material" broadly includes any material which is in either monocrystalline form or polycrystalline form.

The dimensions of the connected crystalline GM 210 and crystalline SA 220 may depend on the purpose for which a specific passively Q-switched laser 200 is designed. In a non-limiting example, a length of aforementioned combination is between 5 and 15 millimeters. In a non-limiting example, a length of aforementioned combination is between 2 and 40 millimeters. In a non-limiting example, a diameter of aforementioned combination (e.g., if a round cylinder) is between 2 and 5 millimeters. In a non-limiting example, a diameter of aforementioned combination (e.g., if a round cylinder) is between 0.5 and 10 millimeters.

The passively Q-switched laser 200 includes a GM crystalline material (GMC) which is rigidly connected to a SA crystalline material (SAC). The rigid coupling may be implemented in any one of the ways known in the art such as using adhesive, diffusion bonding, composite crystal bonding, growing one on top of the other, and so on. However, as discussed below, rigidly connecting crystalline materials which are in a ceramic form may be achieved using simple and cheap means. It is noted that the GM crystalline material and the SA crystalline material may be rigidly connected directly to one another, but may optionally be rigidly connected to one another via an intermediate object (e.g., another crystal). In some implementation, both the GM and the SA may be implemented on single piece of crystalline material, by doping different parts of the single piece of crystalline material with different dopants (such as the ones discussed below with respect to SA crystalline materials and to GM crystalline materials), or by co-doping a single piece of crystalline material, doping the same volume of the crystalline material with the two dopants (e.g., a ceramic YAG co-doped with $N^{3+}$ and $V^{3+}$). Optionally, GM may be grown on a single crystal saturable absorbing substrate (e.g., using Liquid Phase Epitaxy, LPE). It is noted that separate GM crystalline material and SA crystalline material are discussed extensively in the disclosure below, a single piece of ceramic crystalline material doped with two dopants may also be used in any of the following implementations, mutatis mutandis.

FIGS. 2A, 2B and 2C are schematic functional block diagrams illustrating examples of passively Q-switched laser 200, in accordance with examples of the presently disclosed subject matter. In FIG. 2A the two dopants are implemented on two parts of the common crystalline material 262 (acting both as GM and SA), while in FIG. 2B the two dopants are implemented interchangeably on common volume of the common crystalline material 264 (in the illustrated case - the entirety of the common crystal). Optionally, the GM and the SA may be implemented on a single piece of crystalline material doped with neodymium and at least one other material. Optionally (e.g., as exemplified in FIG. 2C), any one or both of the optical coupler 250 and the high reflectivity mirror 240 may be glued directly to one of the crystalline materials (e.g., the GM or the SA, or a crystal combining both).

At least one of the SA crystalline material and the GM crystalline material is a ceramic crystalline material, i.e., the relevant crystalline material (e.g., doped yttrium aluminum garnet, YAG, doped vanadium) in a ceramic form (e.g.,

a polycrystalline form). Having one-and especially both-crystalline material in ceramic form allows for production in higher numbers and in lower costs. For example, instead of growing separate monocrystalline materials in a slow and limited process, polycrystalline materials may be manufactured by sintering of powders (i.e., compacting and possibly heating a powder to form a solid mass), low temperature sintering, vacuum sintering, and so on. One of the crystalline materials (SA crystalline material or GM crystalline material) may be sintered on top of the other, obviating the need for complex and costly processes such as polishing, diffusion bonding, or surface activated bonding. Optionally, at least one of the GM crystalline material and the SA crystalline material is polycrystalline. Optionally, both the GM crystalline material and the SA crystalline material is polycrystalline.

Referring to the combinations of crystalline materials from which the GM crystalline material and the SA crystalline material may be made, such combinations may include:

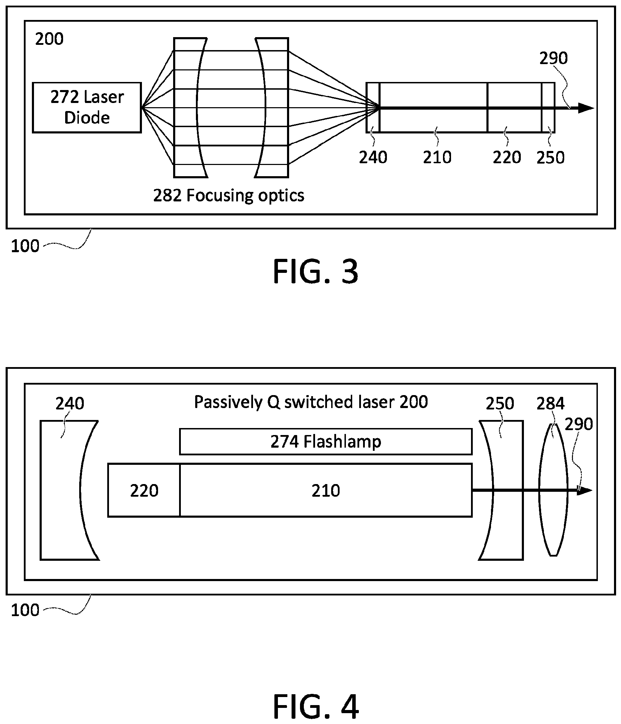

a. The GM crystalline material is ceramic neodymium-doped yttrium aluminum garnet (Nd:YAG), and the SA crystalline material is either (a) ceramic three-valence vanadium-doped yttrium aluminum garnet ($V^{3+}$:YAG), or (b) a ceramic Cobalt-doped crystalline material. Optionally, the ceramic Cobalt-doped crystalline material may be two-valence ceramic Cobalt-doped crystalline material. In those alternatives, both the Nd:YAG and the SA crystalline material selected from the aforementioned group are in ceramic form. A cobalt-doped crystalline material is a crystalline material which is doped with cobalt. Examples include Cobalt-doped Spinel (Co:Spinel, or $Co^{2+}$:MgA$_1_2$O$_4$) cobalt-doped Zinc selenide ($Co^{2+}$:ZnSe), cobalt-doped YAG ($Co^{2+}$:YAG). While not necessarily so, the high reflectivity mirror and the SA in this option may optionally be rigidly connected to the GM and the SA, such that the passively Q-switched laser is a monolithic microchip passively Q-switched laser (e.g., as exemplified in FIGS. 3 and 5).

b. The GM crystalline material is a ceramic neodymium-doped yttrium aluminum garnet (Nd:YAG), and the SA crystalline material is a nonceramic SA crystalline material selected from a group of doped ceramic materials consisting of: (a) three-valence vanadium-doped yttrium aluminum garnet ($V^{3+}$:YAG) and (b) Cobalt-doped crystalline materials. Optionally, the Cobalt-doped crystalline material may be two-valence Cobalt-doped crystalline material. In such case, high reflectivity mirror 240 and output coupler 250 are rigidly connected to the GM 210 and the SA 220, such that passively Q-switched laser 200 is a monolithic microchip passively Q-switched laser.

c. The GM crystalline material which is ceramic neodymium-doped rare-earth element crystalline material, and the SA crystalline material is a ceramic crystalline material selected from a group of doped crystalline materials consisting of: (a) three-valence vanadium-doped yttrium aluminum garnet ($V^{3+}$:YAG) and (b) Cobalt-doped crystalline materials. Optionally, the Cobalt-doped crystalline material may be two-valence Cobalt-doped crystalline material. While not necessarily so, high reflectivity mirror 240 and output coupler 250 in this option may optionally be rigidly connected to the GM 210 and SA 220, such that passively Q-switched laser 200 is a monolithic microchip passively Q-switched laser.

It is noted that in any one of the implementations, a doped crystalline material may be doped with more than one dopant. For example, the SA crystalline material may be doped with the main dopant disclosed above, and with at least one other doping material (e.g., in significantly lower quantities). A neodymium-doped rare-earth element crystalline material is a crystalline material whose unit cell comprises a rare-earth element (one of a well-defined group of 15 chemical elements, including the fifteen lanthanide elements, as well as scandium and yttrium) and which is doped with neodymium (e.g., triply ionized neodymium) which replaces the rear-earth element in a fraction of the unit cells. Few non-limiting examples of neodymium-doped rare-earth element crystalline material which may be used in the disclosure are:

a. Nd:YAG (as mentioned above) , neodymium-doped tungstic acid yttrium potassium (Nd:KYW), neodymium-doped yttrium lithium fluoride (Nd:YLF), neodymium-doped yttrium orthovanadate (YVO$_4$), in all of which the rear-earth element is Neodymium, Nd;

b. Neodymium-doped gadolinium orthovanadate (Nd:GdVO$_4$), neodymium-doped Gadolinium Gallium Garnet (Nd:KGW), neodymium-doped potassium-gadolinium tungstate (Nd:KGW), in all of which the rear-earth element is gadolinium, Gd);

c. Neodymium-doped lanthanum scandium borate (Nd:LSB) in which the rare-earth element is scandium);

d. Other neodymium-doped rare-earth element crystalline materials may be used, in which the rare-earth element may be yttrium, gadolinium, scandium, or any other rare-earth element.

The following discussion applies to any of the optional combinations of GM crystalline materials and SA crystalline materials.

Optionally, the GM crystalline material is rigidly connected directly to the SA crystalline material. Alternatively, the GM crystalline material and the SA crystalline material may be connected indirectly (e.g., each of the SA crystalline material and GM crystalline material being connected via a group of one or more intermediate crystalline materials and/or via one or more other solid materials transparent to the relevant wavelengths). Optionally one or both of the SA crystalline material and the GM crystalline material are transparent to the relevant wavelengths.

Optionally, the SA crystalline material may be cobalt-doped Spinel (Co $Co^{2+}$:MgAl2O4). Optionally, the SA crystalline material may be cobalt-doped YAG (Co:YAG). Optionally, this may enable co-doping of cobalt and neodymium Nd on the same YAG. Optionally, the SA crystalline material may be cobalt-doped Zinc selenide ($Co^{2+}$:ZnSe). Optionally, the GM crystalline material may be a ceramic cobalt-doped crystalline material.

Optionally, an initial transmission (To) of the SA is between 75% and 90%. Optionally, the initial transmission of the SA is between 78% and 82%.

The wavelengths emitted by the laser depend on the material used in its construction, and especially on the materials and dopants of the GM crystalline material and the SA crystalline material. Some examples of output wavelengths include wavelengths in the range of 1,300nm and 1,500nm. Some more specific examples include 1.32$\mu$m or about 1.32$\mu$m (e.g., 1.32$\mu$m$\pm$3nm), 1.34$\mu$m or about 1.34$\mu$m (e.g., 1.34$\mu$m$\pm$3nm), 1.44$\mu$m or about 1.44$\mu$m (e.g., 1.44$\mu$m$\pm$3nm). A corresponding imager sensitive to one or more of these light frequency ranges may be included in SWIR optical system 100 (e.g., as exemplified in FIG. 5).

FIGS. 3 and 4 are schematic functional diagrams illustrating SWIR optical system 100, in accordance with examples of the presently disclosed subject matter. As exemplified in these illustrations, laser 200 may include additional components in addition to those discussed above, such as (but not limited to):

a. A light source such as a flashlamp 274 or a laser diode 272 which serves as a pump for the laser. Referring to the previous examples, the light source may serve as a pump.
b. Focusing optics 282 (e.g., lenses) for focusing light from the light source (e.g. 272) onto the optical axis of laser 200.
c. A diffuser or other optics 284 for manipulating laser beam 290 after it exits optical cavity 230.

Optionally, SWIR optical system 100 may include optics to spread the laser over a wider field of view (FOV), in order to improve eye safety issues in the FOV. Optionally the passively Q-switched laser 200 is a diode pumped solid state laser (DPSSL).

Optionally, passively Q-switched laser 200 includes at least one diode pump light source 272 and optics 282 for focusing light of the pump light source 272 into the optical resonator. Optionally, light source 272 is positioned on the optical axis (as an end pump). Optionally, light source 272 may be rigidly connected to high reflectivity mirror 240 or to the SA 210, such that light source 272 is a part of a monolithic microchip passively Q-switched laser. Optionally, the light source of the laser may include one or more vertical-cavity surface-emitting laser (VCSEL) array. Optionally, passively Q-switched laser 200 includes at least one VCSEL array and optics for focusing light of the VCSEL array into the optical resonator. The wavelengths emitted by the light source (e.g., the laser pump) may depend on the crystalline materials and/or dopants used in the laser. Some example pumping wavelengths which may be emitted by the pump include: 808nm or about 808nm, 869nm or about 869 nm, about nine hundred and some nm.

FIG. 5A is a schematic functional block diagram illustrating a SWIR optical system 100, in accordance with other examples of the presently disclosed subject matter. As mentioned above, SWIR optical system 100 may include additional components such as any one or more of the following components: corresponding sensor 120 (for sensing light of the laser reflected from external objects), processor 140 (for processing sensing results), controller 130 (for controlling activity of the laser, e.g., for synching its operation with that of the laser), and so on. Some such examples are discussed in further details below. Optionally, SWIR optical system 100 may include SWIR photodetector array 126 sensitive to the wavelength of the laser. This way SWIR optical system may serve as an active SWIR camera, SWIR time-of-flight (ToF) sensor, SWIR light detection and ranging (LIDAR) sensor, and so on. Optionally, SWIR optical system 100 may include a ToF SWIR sensor sensitive to the wavelength of the laser. Optionally, the photodetector array may be a CMOS based photodetector array which is sensitive to SWIR frequencies emitted by laser 200, such is a CMOS based photodetector arrays designed and manufactured by TriEye LTD. Of Tel Aviv, Israel.

Optionally, SWIR optical system 100 may include processor 140 for processing detection data from SWIR photodetector array 126 (or any other light sensitive sensor of SWIR optical system 100). For example, processor 140 may process the detection information to provide a SWIR image of a field-of-view (FOV) of SWIR optical system 100, in order to detect objects in the FOV, and so on. Optionally, SWIR optical system 100 may include a time of flight (ToF) SWIR sensor (e.g., as sensor 120) sensitive to the wavelength of the laser, and a controller operable to synchronize operation of the ToF SWIR sensor and the passively Q-switched SWIR laser for detecting a distance to at least one object 910 in the field of view of SWIR optical system 100. Optionally, SWIR optical system 100 may include a controller 130 operable to control one or more aspects of an operation of Q-switched laser 200 or other components of the system such as the photodetector array 126 (e.g., focal plane array, FPA). For example, some of the parameters of the laser which may be controlled by controller 130 include timing, duration, intensity, focusing, and so on. While not necessarily so, controller 130 may control operation of laser 200 based on detection results of the photodetector array (directly, or based on processing by processor 140). Optionally, controller 130 may be operable to control the laser pump or other type of light source in order to affect activation parameters of laser 200. Optionally, controller 130 may be operable to dynamically change the pulse repetition rate. Optionally, controller 130 may be operable to control dynamic modification of the light shaping optics, e.g., for improving a Signal to Noise Ratio (SNR) in specific regions of the field of view. Optionally, controller 130 may be operable to control the illumination module for dynamically changing pulse energy and/or duration, (e.g., in the same ways possible for other passively Q-switched lasers, such as changing focusing of pumping laser, etc.)

Optionally, SWIR optical system 100 may include temperature control (e.g., passive temperature control, active temperature control) for controlling a temperature of the laser generally, or of one or more of its components (e.g., of the pump diode). Such temperature control may include, for example, a thermoelectric cooler (TEC), a fan, a heat sink, resistance heater under pump diode, and so forth.

The power of the laser may depend on the utilization for which it is designed. For example, the laser output power may be between 1W and 5W. For example, the laser output power may be between 5W and 15W. For example, the laser output power may be between 15W and 50W. For example, the laser output power may be between 50W and 200W. For example, the laser output power may be higher than 200W.

FIG. 5B is a schematic functional block diagram illustrating yet another SWIR optical system 100, in accordance with yet other examples of the presently disclosed subject matter. As exemplified in FIG. 5B, system 200 may include a laser amplifier 310, for amplifying the output light signal of laser 200. The amplifier 310 may be pumped by a dedicated diode 320, or using any other suitable light source. It is noted that laser amplifier 310 may be implemented as an independent amplification unit 300 (illustrated), as part of laser 200 (e.g., rigidly connected to laser 200), or as part of any other system. It is noted that laser amplifier 310 may also be implemented in other configurations of electrooptic system 200 (e.g., ones that use side pumping), even if not illustrated.

The SWIR-Q-switched laser 200 is a pulsed laser, and may have different frequency (repetition rate), different pulse energy, and different pulse duration, which may depend on the utilization for which it is designed. For example, a repetition rate of the laser may be between 10Hz and 50Hz. For example, a repetition rate of the laser may be between 50Hz and 150Hz. For example, a pulse energy of the laser may be between 0.1mJ and 1mJ. For example, a pulse energy of the laser may be between 1mJ and 2mJ. For example, a pulse energy of the laser may be between 2mJ and 5mJ. For example, a pulse energy of the laser may be higher than 5mJ. For example, a pulse duration of the laser may be between 10ns and 100ns. For example, a pulse duration of the laser may be between $0.1\mu s$ and $100\mu s$. For example, a pulse duration of the laser may be between $100\mu s$ and 1ms. The Size of the laser may also change, depending for example on the size of its components. For example, the laser dimensions may be $X_1$ by $X_2$ by $X_3$, wherein each of the dimensions ($X_1, X_2$, and $X_3$) is between 10mm and 100mm, between 20 and 200mm, and so on. The output coupling mirror may be flat, curved, or slightly curved.

Optionally, SWIR optical system 100 may further include undoped YAG in addition to the GM and to the SA, for preventing heat from accumulating in an absorptive region of the GM. The undoped YAG may optionally be shaped as a cylinder (e.g., a concentric cylinder) encircling the GM and the SA.

It is noted that SWIR optical system 100 may include additional components, in addition to the ones discussed above. Few nonlimiting examples are provided below. Optionally, SWIR optical system 100 may include another laser which is used to bleach at least one of the GM and the SA. Optionally, SWIR optical system may include an internal photosensitive detector (e.g., one or more photodiodes) which are operable to measure a time in which a pulse is generated by Passively Q-switched laser 200, wherein the processor is operable to issue, based on the timing information obtained from the internal photosensitive detector, a triggering signal to the photodetector array (or other type of camera or sensor) which detects reflection of laser light from objects in the field of view of system 100. Such an internal photosensitive detector is exemplified in FIG. 5B (denoted as "Pulse detection photodiode" in the illustrated example).

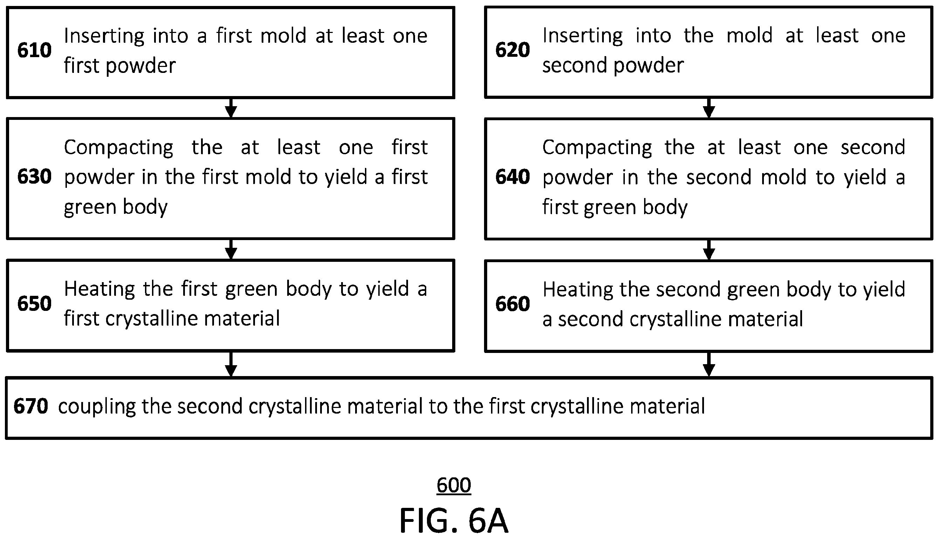

FIG. 6A is a flow chart illustrating an example of method 600, in accordance with examples of the presently disclosed subject matter. Method 600 is a method for manufacturing parts for a passively Q-switched laser such as but not limited to passively Q-switched laser 200 discussed above. Referring to the examples set forth with respect to the previous drawings, the passively Q-switched laser may be laser 200. It is noted that any variation discussed with respect to laser 200 or to a component thereof may also be implemented for the passively Q-switched laser whose parts are manufactured in method 600 or to a corresponding component thereof, and vice versa.

Method 600 starts with stage 610 of inserting into a first mold at least one first powder, which is processed later in method 600 to yield a first crystalline material. The first crystalline material serves as either the GM or the SA of the passively Q-switched laser. In some implementations the GM of the laser is made first (e.g., by way of sintering), and the SA is made later on top of the previously made GM (e.g., by way of sintering). On other implementations, the SA of the laser is made first, and the GM is made later on top of the previously made SA. In yet other implementations, the SA and the GM are made independently of one another, and are coupled to form a single rigid body. The coupling may be done as part of the heating, sintering, or later.

Stage 620 of method 600 includes inserting into a second mold at least one second powder different than the at least one first powder. The at least one second powder is processed later in method 600 to yield a second crystalline material. The second crystalline material serves as either the GM or the SA of the passively Q-switched laser (so that one of the SA and the GM is made from the first crystalline material and the other functionality is made from the second crystalline material).

The second mold may be different from the first mold. Alternatively, the second mold may be the same as the first mold. In such case the at least one second powder may be inserted, for example, on top of the at least one first powder (or on top of the first green body, if already made), beside it, around it, and so on. The inserting of the at least one second powder into the same mold of the at least one first powder (if implemented) may be executed before processing of the at least one first powder into a first green body, after processing of the at least one first powder into the first green body, or sometime during the processing of the at least one first powder into the first green body.

The first powder and/or the second powder may include crushed YAG (or any of the other aforementioned materials such as Spinel, $MgAl_2O_4$, ZnSe) and doping materials (e.g., $N^{3+}$, $V^{3+}$, Co). The first powder and/or the second powder may include materials from which YAG (or any of the other aforementioned materials such as Spinel, $MgAl_2O_4$, ZnSe) is made and doping material (e.g., $N^{3+}$, $V^{3+}$, Co).

Stage 630 is executed after stage 610, and includes compacting the at least one first powder in the first mold to yield a first green body. Stage 620 is executed after stage 640, and includes compacting the at least one second powder in the second mold, thereby yielding a second green body. If the at least one first powder and the at least one second powder are inserted into the same mold in stages 610 and 620, the compacting of the powders in stage 630 and 640 may be done concurrently (e.g., pressing on the at least one second powder, which in turn compresses the at least one first powder against the mold), but this is not necessarily so. For example, stage 620 (and therefore also stage 640) may optionally be executed after the compressing of stage 630.

Stage 650 includes heating the first green body to yield a first crystalline material. Stage 660 includes heating the second green body to yield a second crystalline material. in different embodiments, the heating of the first crystalline may be executed before, concurrently, partly concurrently, or after each one of stages 630 and 650.

Optionally, the heating of the first green body at stage 650 precedes the compacting (and possibly also precedes the inserting) of the at least one second powder in stage 640 (and possibly stage 620). The first green body and the second green body may be heated separately (e.g., in different times, in different temperatures, for different durations). The first green body and the second green body may be heated together (e.g., in the same oven), either connected to each other during the heating or not. The first green body and the second green body may be subject to different heating regimes, which may share partial co-heating, while being heated separately in other parts of the heating regimes. For example, one or both of the first green body and the second green body may be heated separately from the other green body, and then the two green bodies may be heated together (e.g., after coupling, but not necessarily so). Optionally, the heating of first green body and the heating of the second green body comprise concurrent heating of the first green body and the second green body in a single oven. It is noted that optionally, the coupling of stage 670 is a result of the concurrent heating of both of the green bodies in the single oven. It is noted that optionally, the coupling of stage 670 is done by co-sintering both of the green bodies after being physically connected to one another.

Stage 670 of method 600 includes coupling the second crystalline material to the first crystalline material. The coupling may be executed in any way of coupling known in the art, several nonlimiting examples of which were discussed above with respect to passively Q-switched laser 200. It is noted that the coupling may have several sub-stages, some of which may intertwine with different stages out of stages 630, 640, 650, and 660 in different manners in different embodiments. The coupling results in a single rigid crystalline body which includes both the GM and the SA.

It is noted that method 600 may include additional stages which are used in the making of crystals (and especially in the making of ceramic or non-ceramic polycrystalline crystal compounds of polycrystalline materials which are bounded to each other). Few nonlimiting examples include powder preparation, binder burn-out, densification, annealing, polishing (if required, as discussed below), and so on.

The GM of the passively Q-switched laser in method 600 (which, as aforementioned, can be either the first crystalline material or the second crystalline material), is a neodymium-doped crystalline material. The SA of the passively Q-switched laser in method 600 (which, as aforementioned, can be either the first crystalline material or the second crystalline material), is selected from a group of crystalline materials consisting of: (a) a neodymium-doped crystalline material, and (b) a doped crystalline material selected from a group of doped crystalline materials consisting of: three-valence vanadium-doped yttrium aluminum garnet ($V^{3+}$:YAG) and cobalt-doped crystalline materials. At least one of the GM and the SA is a ceramic crystalline material. Optionally, both of the GM and the SA are ceramic crystalline materials. Optionally, at least one of the GM and the SA is a polycrystalline material. optionally, both the GM and the SA are polycrystalline materials.

While additional stages of the manufacturing process may take place between the different stages of method 600, notably polishing of the first material before bonding of the second material in the process of sintering is not required in at least some of the implementations.

Referring to the combinations of crystalline materials from which the GM crystalline material and the SA crystalline material may be made in method 600, such combinations may include:

a. The GM crystalline material is ceramic neodymium-doped yttrium aluminum garnet (Nd:YAG), and the SA crystalline material is either (a) ceramic three-valence vanadium-doped yttrium aluminum garnet ($V^{3+}$:YAG), or (b) a ceramic Cobalt-doped crystalline material. In this alternative, both the Nd:YAG and the SA crystalline material selected from the aforementioned group are in ceramic form. A cobalt-doped crystalline material is a crystalline material which is doped with cobalt. Examples include Cobalt-doped Spinel (Co:Spinel, or $Co^{2+}$:$MgAl_2O_4$) cobalt-doped Zinc selenide ($Co^{2+}$:ZnSe). While not necessarily so, the high reflectivity mirror and the SA in this option may optionally be rigidly connected to the GM and the SA, such that the passively Q-switched laser is a monolithic microchip passively Q-switched laser.

b. The GM crystalline material is a ceramic neodymium-doped yttrium aluminum garnet (Nd:YAG), and the SA crystalline material is a nonceramic SA crystalline material selected from a group of doped ceramic materials consisting of: (a) three-valence vanadium-doped yttrium aluminum garnet ($V^{3+}$:YAG) and (b) Cobalt-doped crystalline materials. In such case, the high reflectivity mirror and the SA are rigidly connected to the GM and the SA, such that the passively Q-switched laser is a monolithic microchip passively Q-switched laser.

c. The GM crystalline material which is ceramic neodymium-doped rare-earth element crystalline material, and the SA crystalline material is a ceramic crystalline material selected from a group of doped crystalline materials consisting of: (a) three-valence vanadium-doped yttrium aluminum garnet ($V^{3+}$:YAG) and (b) Cobalt-doped crystalline materials. While not necessarily so, the high reflectivity mirror and the SA in this option may optionally be rigidly connected to the GM and the SA, such that the passively Q-switched laser is a monolithic microchip passively Q-switched laser.

Referring to method 600 as a whole, it is noted that optionally one or both of the SA crystalline material and the GM crystalline material (and optionally one or more intermediate connecting crystalline materials, if any) are transparent to the relevant wavelengths (e.g., SWIR radiation).

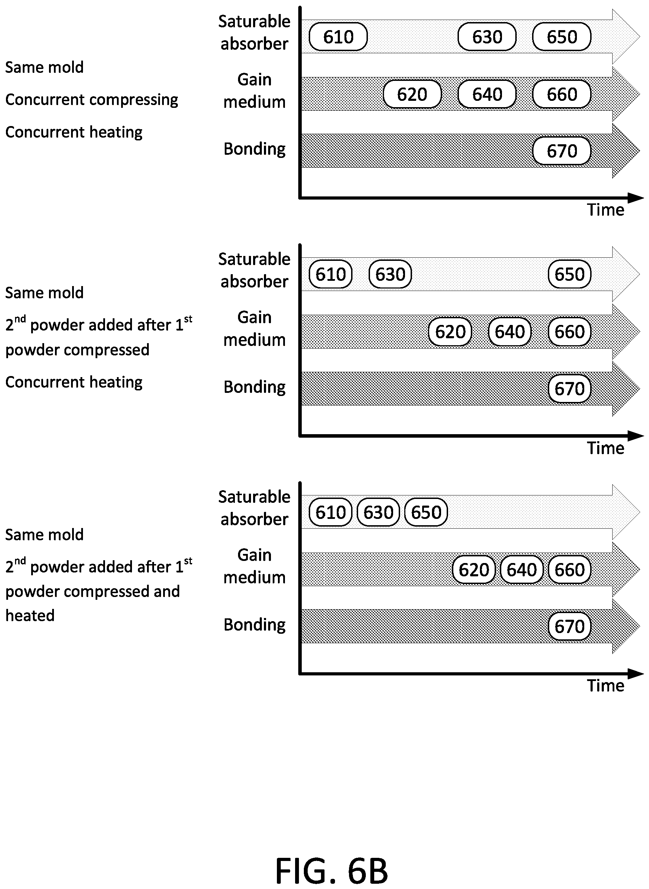

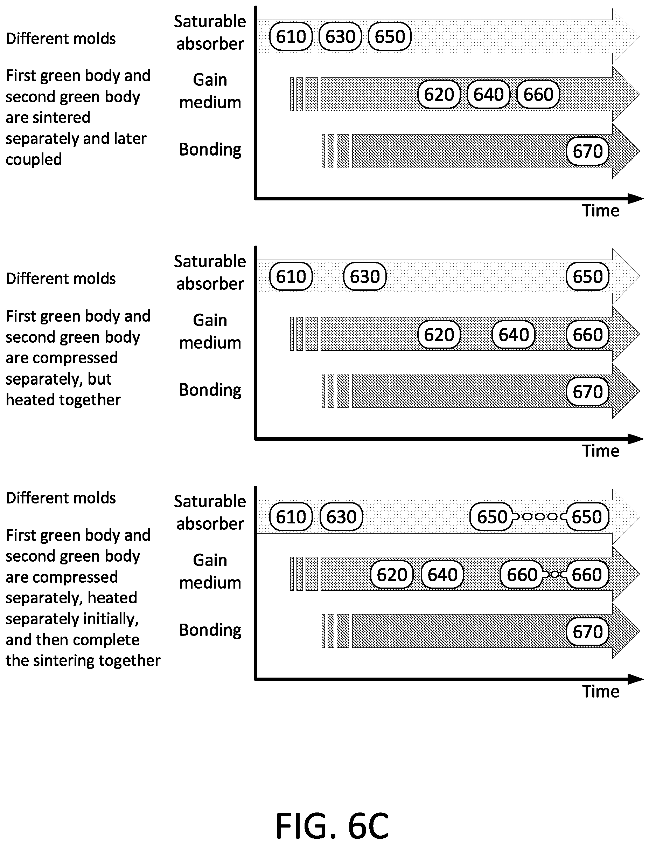

FIGS. 6B and 6C include several conceptual timelines for the execution of method 600, in accordance with examples of the presently disclosed subject matter. In order to simplify the drawing, it is assumed that the SA is a result of the processing of the at least one first powder, and that the GM is a result of the processing of the at least one second powder. As mentioned above, the roles may be reversed.

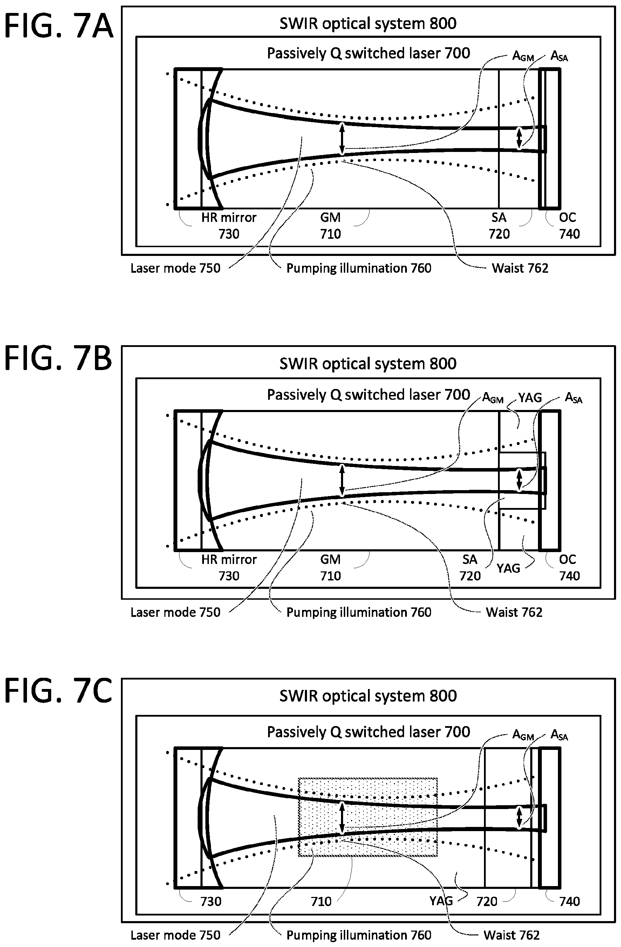

FIGS. 7A-7C are schematic functional block diagrams illustrating examples of a passively Q-switched lasers 700, in accordance with examples of the presently disclosed subject matter. Optionally, laser 700 may be implemented as any suitable variation of laser 200 discussed above, but this is not necessarily so. Laser 700 may be a part of an electrooptical system 800. Optionally, electrooptical system 800 may be implemented as any suitable variation of electrooptical system 100 discussed above, but this is not necessarily so.

Laser 700 includes GM 710 that is characterized by a stimulated emission cross section denoted (denoted $\sigma_{SE}$). Laser 700 also includes SA 720 that is characterized by an absorption cross section (denoted $\sigma_a$). In some combinations of materials of GM 710 and SA 720, $\sigma_a$ is smaller than $\sigma_{SE}$, or not significantly larger from the $\sigma_{SE}$ (e.g., $\sigma_a < 3 \cdot \sigma_{SE}$). For example, GM 710 may be made from neodymium-doped yttrium aluminum garnet (Nd:YAG), and SA 720 may be made from cobalt-doped YAG ($Co^{2+}$:YAG). In such cases, most of the pump energy stored in GM 710 is used for saturating SA 720, leaving only a small fraction of the energy for amplification. In order to reduce the amount of energy required to saturate the absorber, laser 700 includes an optical resonator with dedicated geometry, as discussed in greater detail below. In the proposed geometries, only a small fraction of the stored energy is required to saturate the absorber, leading to high efficiency and therefore high output energy.

The optical resonator (within which GM 710 and SA 720 are positioned) includes high reflectivity mirror 730 and output coupler 740. At least one of HR mirror 730 and OC 740 includes a curved mirror, such that the combinations of mirrors of the optical resonator directs light within the optical resonator which causes an effective cross-section of the laser mode within the SA (denoted $A_{SA}$) to be smaller than a cross-section of the laser mode within a Rayleigh length of the pump beam (denoted $A_{GM}$). It is noted that while a diameter of the mode may change somewhat within the SA, it would not change by much, since SA 720 is relatively narrow. Therefore, for simplicity of calculations, a single effective diameter may represent the small range of diameters of the mode within the SA (the effective diameter being included in the small range of diameters, and usually close to an average diameter of the mode along SA 720).

The laser mode is denoted 750 in the diagram, and the pumped volume is denoted 760. A waist of the pumped volume is denoted 762. In cases in which the cross-section of the laser mode within the SA in not constant along the entire SA 720, $A_{SA}$ may represent an average effective cross-section of the laser mode throughout SA 720. Likewise, in cases in which the cross-section of the laser mode is not constant throughout the Rayleigh length of the pump, $A_{GM}$ may represent an average cross-section of the laser mode within the Rayleigh length of the pump. The Rayleigh length (or *Rayleigh range*) of a laser beam is the distance from the beam waist (in the propagation direction) where the beam radius is increased by a factor of the square root of 2 (e.g., for a circular beam, the mode area is doubled at this point). It is noted that both $A_{SA}$ and $A_{GM}$ are geometrical area (e.g., measured in $cm^2$ units), while $\sigma_a$ and $\sigma_{SE}$ are properties

of the materials of GM 710 and of SA 720, and are also represented in area units (e.g., in cm² units).

Using concave mirrors focuses larger energy density per area unit in SA 720 with respect to the energy density per area unit in GM 710, which causes only a small fraction of the stored energy is required to saturate the absorber, leading to high efficiency and therefore high output energy.

The focusing of energy may be done to different degrees, depending on various considerations such as materials chosen for the GM and the SA, desired laser output power, and so on. For example, the radius of the one or more concave mirrors (out of HR mirror 730 and OC 740) may be selected such that a ratio between $\sigma_{SE}$ and $A_{GM}$ is smaller by a factor of at least three than a ratio between $\sigma_a$ and $A_{SA}$ $\left( \frac{\sigma_{SE}}{A_{GM}} \cdot 3 < \frac{\sigma_a}{A_{SA}} \right)$ . Other ratios may also be chosen.

For example, the geometry of the optical resonator may be such that: $\frac{\sigma_{SE}}{A_{GM}} \cdot 2 < \frac{\sigma_a}{A_{SA}}$ ;

$\frac{\sigma_{SE}}{A_{GM}} \cdot 5 < \frac{\sigma_a}{A_{SA}}$ ; $\frac{\sigma_{SE}}{A_{GM}} \cdot 7 < \frac{\sigma_a}{A_{SA}}$ ; $\frac{\sigma_{SE}}{A_{GM}} \cdot 10 < \frac{\sigma_a}{A_{SA}}$ ; $\frac{\sigma_{SE}}{A_{GM}} \cdot 25 < \frac{\sigma_a}{A_{SA}}$ ; or $\frac{\sigma_{SE}}{A_{GM}} \cdot 50 < \frac{\sigma_a}{A_{SA}}$ .

As mentioned above, optionally GM 710 may be made of neodymium-doped yttrium aluminum garnet (Nd:YAG) and SA 720 may be made from cobalt-doped YAG (Co²⁺:YAG). However, other materials may be used for either GM 710 or SA 720. In a nonlimiting example, any of the materials discussed above with respect to the GM and the SA of passively Q-switched laser 200 may be used for GM 710 and for SA 720, respectively. GM 710 and SA 720 may be implemented on the same type of crystal (e.g., YAG, Spinel, Zinc selenide) with different dopants, but this is not necessarily so.

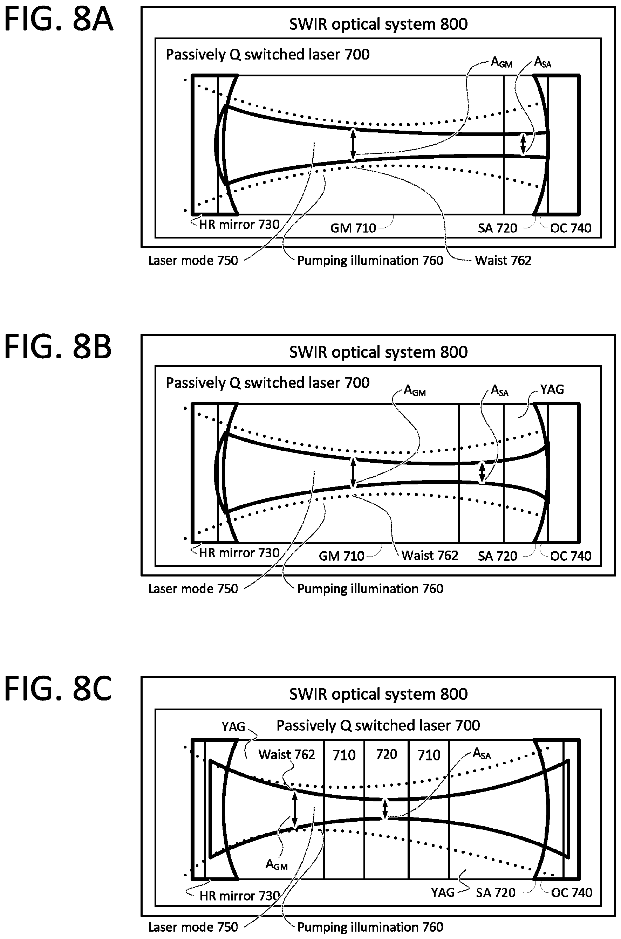

As mentioned above, optionally passively Q-switched laser 700 may be a microchip laser, e.g., as discussed above with respect to passively Q-switched laser 200 (mutatis mutandis). Optionally, high reflectivity mirror 730 and output coupler 740 are rigidly coupled to GM 710 and to SA 720, such that the passively Q-switched laser is a monolithic microchip passively Q-switched laser. It is noted that those components are not necessarily coupled directly to one another. For example, undoped YAG (or any other suitable crystal) may be positioned between high reflectivity mirror 730 to GM 710, between GM 710 and SA 720, and/or between SA 720 and output coupler 740. An example for such a configuration is provided in Figs 7C, 8B, and 8C.

Either one of HR mirror 730 and/or output coupler 740 may be a concave mirror (or an optical equivalent thereof). Such a concave mirror may be a spherical concave mirror or another type of concave mirror). Optionally, both of high reflectivity mirror 730 and output coupler 740 are concave mirrors (or optically equivalent arrangement). Such implementations are illustrated in FIGS. 8A, 8B, and 8C, in accordance with examples of the presently disclosed subject matter. Having both the HR mirror 730 and OC 740 curved may be used for different ends. For example, having both the HR mirror 730 and OC 740 curved may be used for shaping of the mode of the laser. For example, having both the HR mirror 730 and OC 740 curved may be used for keeping the highest energy intensity distanced from optical surfaces such as mirror coatings (e.g., from the output coupler 740), e.g., in order to prevent damaging of the OC by the heat generated in the SA 720. Such a variation is illustrated in FIG. 8B. Optionally, the curvature of the concave HR mirror 730 and the curvature of the concave OC 740 are such than the highest energy density is within the middle 60% of the optical resonator (i.e., if the distance between the furthest two points - one on the HR mirror and one on the OC - is denoted D, then the distance between HR mirror 730 and the location of highest energy density is larger than 0.2D. Also, in such case the distance between OC coupler and the location of highest energy density is larger than 0.2D).

Referring to the example of FIG. 7B, a diameter of SA 720 may optionally be smaller than a diameter of GM 710, such that SA 720 is surrounded by another material (e.g., undoped YAG) for releasing heat from the optical resonator. It is noted that GM 710, SA 720, or both, may also be covered in undoped YAG (or another type of crystal or other material) to improve removal of heat from the laser 700 (even if a diameter of SA 720 is not smaller than that of GM 710). In other words, optionally laser 700 may include undoped YAG (or other suitable material such any suitable crystal of the materials mentioned above) in addition to the GM and to the SA, for preventing heat from accumulating in an absorptive region of the GM. For example, the undoped YAG (or other suitable material) may be shaped as a cylinder encircling the GM and the SA.

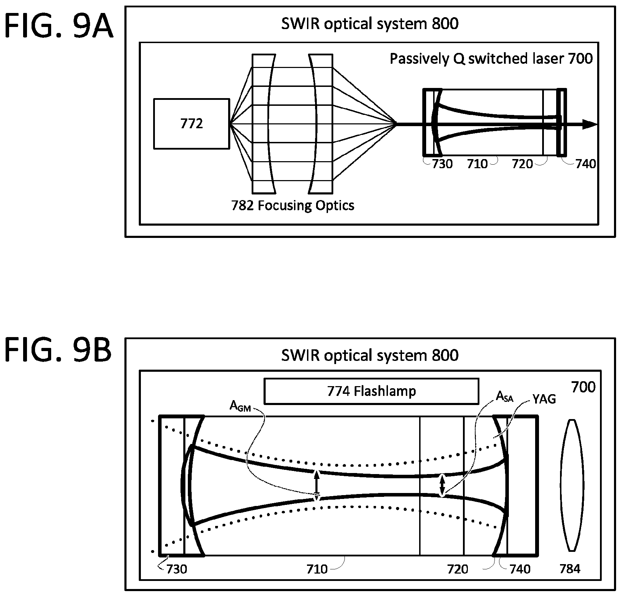

It is noted that laser 700 may be an end pumped laser, or a side pump laser. FIGS. 9A and 9B are schematic functional block diagrams illustrating examples of electrooptical system 800 with an end-pumped passively Q-switched laser 700 (FIG. 9A) and an electrooptical system 800 with a side-pumped passively Q-switched laser 700 (FIG. 9B), in accordance with examples of the presently disclosed subject matter. respectively. Optionally, laser 700 may include at least one end-pumping light source 772, and optics 782 for focusing light of the diode pump light source into the optical resonator. Optionally, laser 700 may include at least one side-pumping light source 774, and suitable optics 784 (e.g., a diffuser). An example for pumping light source includes (but are not limited to) a diode or a vertical-resonator surface-emitting laser (VCSEL) array. The components of FIG. 9A may be similar to the corresponding components of FIG. 3, mutatis mutandis, and the components of FIG. 9B may be similar to the corresponding components of FIG. 4, mutatis mutandis. The discussion is not repeated for reasons of brevity of the disclosure.

As mentioned above, any variation discussed with respect to laser 200 may also be applicable, mutatis mutandis, to laser 700. For example, passively Q-switched laser 700 may include GM and SA that are polycrystalline materials. Optionally, GM 710 and SA 720 may be implemented on a single piece of crystalline material doped with neodymium and at least one other material. optionally, passively Q-switched laser 700 emits light through the output coupler within the wavelengths range of 1,300nm and 1,500nm. Optionally, Q-switched laser 700 may emit light through the output coupler within the wavelengths whose center frequency is selected from a group of center frequencies consisting of: (a) $1.32\mu m\pm 3nm$, (b) $1.34\mu m\pm 3nm$, and (c) $1.44\mu m\pm 3nm$. Optionally, an initial transmission (To) of SA 720 is between 75% and 90%. Optionally, the initial transmission (To) of the SA 7209 is between 78% and 82%.

FIGS. 10A and 10B are schematic functional block diagrams illustrating examples of electrooptical systems 800, in accordance with examples of the presently disclosed subject matter. Referring to electrooptical system 800 as a hole, system 900 may include, in addition to laser 700, also a SWIR photodetector array sensitive to the wavelength of the laser, for detecting reflections of laser illumination off at least one illuminated object. Optionally, system 800 may include a ToF SWIR sensor sensitive to the wavelength of the laser, a controller operable to synchronize operation of the ToF SWIR sensor and the passively Q-switched laser, and a processor operable to process detections by the ToF SWIR sensor of reflections of laser illumination of the passively Q-switched laser, for determining a distance to at least one object in the field of view of the SWIR electrooptical system.

FIG. 10B is a schematic functional block diagram illustrating an example of short-wave infrared (SWIR) optical system 800, in accordance with examples of the presently disclosed subject matter. As exemplified in FIG. 5B, system 800 may include a laser amplifier 510, for amplifying the output light signal of laser 700. The amplifier 510 may be pumped by a dedicated diode 520, or using any other suitable light source. It is noted that laser amplifier 510 may be implemented as an independent amplification unit 500 (illustrated), as part of laser 700 (e.g., rigidly connected to laser 700), or as part of any other system. It is noted that laser amplifier 510 may also be implemented in other configurations of electrooptic system 800 (e.g., ones that use side pumping), even if not illustrated. The components of FIG. 10A may be similar to the corresponding components of FIG. 5A, mutatis mutandis, and the components of FIG. 10B may be similar to the corresponding components of FIG. 4B, mutatis mutandis. The discussion is not repeated for reasons of brevity of the disclosure.

It is noted that any variation discussed above of passively Q-switched laser 700 may be manufactured, for example, by implementing method 600 discussed above, mutatis mutandis. Method 600 may include the suitable stages required for giving the manufactured passively Q-switched laser the aforementioned characterizations of passively Q-switched laser 700 discussed above. For example, method 600 may be adapted to provide the manufactured passively Q-switched laser the physical characteristics discussed above (e.g., the stimulated emission cross section ($\sigma$SE), the absorption cross section ($\sigma$a), the effective cross-section of the laser mode within the SA).

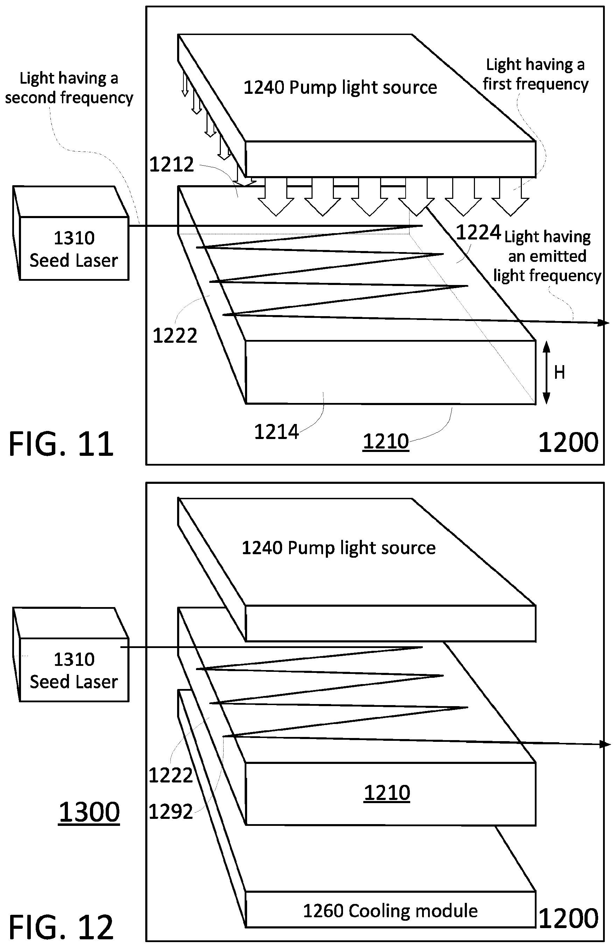

FIGS. 11 and 12 are exploded-view perspective projections of GM amplifiers 1200, in accordance with examples of the presently disclosed subject matter. Referring to the examples set forth with respect to the previous drawings, it is noted that GM amplifier 1200 may serve as laser amplifier 310 of system 100 (or of passively Q-switched laser 200, if integrated in it). Referring to the examples set forth with respect to the previous drawings, it is noted that GM amplifier 1200 may serve as laser amplifier 510 of system 800 (or of passively Q-switched laser 700, if integrated in it). However, any suitable type of laser amplifiers may be implemented as laser amplifier 310 and/or 510. GM amplifier 1200 may be fed by any suitable seed laser (denoted 1300), such as-but not limited to-any variation of passively Q-switched laser 200 and passively Q-switched laser 700.

GM amplifier 1200 includes at least flat neodymium-doped yttrium aluminum garnet (Nd:YAG) crystal 1210. Crystal 1210 has an average thickness of less than 5 millimeters (e.g., about 1 mm, further examples are provided below), while at least one of the other dimensions of crystal 1210 are longer (e.g., at least 5 times longer), and possibly both of the perpendicular dimensions are at least 5 times longer than the average thickness of crystal 1210.

Flat Nd:YAG crystal 1210 includes at least:

a. Top surface 1212 through which pump light having a first frequency (also referred to as "pump frequency") enters the flat Nd:YAG crystal 1210 (e.g., from optional pump light source 1240).
b. Bottom surface 1214, opposing top surface 1212.
c. First side surface 1222, through which incoming laser light having a second frequency (e.g., from optional seed laser 310) enters the flat Nd:YAG crystal.
d. Second side surface 1224 through which outgoing laser light having the second frequency is emitted from the flat Nd:YAG crystal after being reflected by multiple different sides surfaces of the flat Nd:YAG crystal. The power of the outgoing laser light is at least 4 times stronger than a power of the incoming laser light, after being amplified using the pump light. Stronger amplification levels may be implemented, such as at least 5, at least 7, at least 10, at least 15, at least 20, at least 30, and so on.

The flat Nd:YAG crystal may include additional side surfaces in addition to the surfaces mentioned above. Some or all of the surfaces of the flat Nd:YAG crystal (optionally including one or both of the first side surface and the second side surface) may be flat or substantially flat, but this is not necessarily so, and curved surfaces may also be implemented. The light may be internally reflected within the flat Nd:YAG crystal from one or both of the first side surface and the second side surface, but this is not necessarily so. The light may be internally reflected within the flat Nd:YAG crystal from one or more surfaces other than the first side surface and the second side surface, but this is not necessarily so. The first side surface and the second side surfaces may be parallel to each other, but this is not necessarily so. It is noted that the terms "top" and "bottom" are arbitrary terms used to identify to opposing sides, and these surfaces may be positioned in different orientations in different implementations of the disclosure. The top surface may be parallel to the bottom surface (e.g., as illustrated in the diagram), but this is not necessarily so. The first side surface may have at least one shared edge with the top surface and/or with the bottom surface, but this is not necessarily so. Additionally, the second side surface may have at least one shared edge with the top surface and/or with the bottom surface, but this is not necessarily so. It is noted that any combination of the above optional implementations may be implemented, even if not explicitly stated for reasons of brevity.

The number of times light is reflected internally within flat Nd:YAG crystal 1210 before being emitted as outgoing laser light affects the gain of GM amplifier 1200, which is exponentially correlated to the distance light pass within the doped crystal. Optionally, the optical path of the incoming laser light until it is emitted as outgoing laser light includes at least 10 internal reflections 1292. Different number of internal reflections may also be implemented, such as between 10-15, between 15-20, between 20-25, between 25-35, or more. Optionally, the optical path of the incoming laser light until it is emitted as outgoing laser light is at least 50 times longer than the average thickness of the flat Nd:YAG crystal. Different ratios between the optical path and the average thickness may be implemented, such as between 50-100, between 100-200, or more than 200.

The flat Nd:YAG crystal may be used to amplify specific frequencies. The pump light may be of one or more pump frequencies (or pump frequency ranges). For example, the pump frequency may be between 750 nanometer (nm) and 850nm. For example, the pump frequency may be between 780nm and 830nm. For example, the pump frequency may be between 800nm and 850nm. For example, the pump frequency may be between 800nm and 820nm. For example, the pump frequency may be 808nm±2nm. However, other frequency ranges may be implemented. The pump light may be laser light (e.g., vertical-cavity surface-emitting laser or any other type of laser), light emitting diode (LED) light, or light of any other suitable source.

The outgoing laser light may be of one or more emitted light frequencies (or emitter frequency ranges). For example, the emitted light frequency may be between 1,300nm and 1,400nm. For example, the emitted light frequency may be between 1,310nm and 1,370nm. For example, the emitted light frequency may be between 1,330nm and 1,350nm. For example, the emitted light frequency may be 1,340nm±2nm.

The second laser frequency (also referred to as "incoming laser frequency") may be the same frequency as the outgoing laser frequency. For example, the second light frequency may be between 1,300nm and 1,400nm. For example, the second light frequency may be between 1,310nm and 1,370nm. For example, the second light frequency may be between 1,330nm and 1,350nm. For example, the second light frequency may be 1,340nm±2nm.

Top surface 1212 has a first dimension (e.g., length) and a second dimension (e.g., width) that is orthogonal to the first dimension. The first dimension is at least 5 times longer than the average thickness of the flat Nd:YAG crystal. For example, if the average thickness of the flat Nd:YAG crystal is 1mm, the first dimension may be any length that is equal or larger to 5mm (e.g., 5mm, 10mm, between 5-15mm, between 15-25mm, etc.). The average thickness may vary according to the application, such as smaller than 0.5mm, between 0.5-1mm, between 1-1.5mm, between 1.5-2mm, between 2-5mm, and so on. The length of the flat Nd:YAG crystal is its largest measure along the first dimension. Optionally, the average length along the first dimension may also be at least times longer than the average thickness of the flat Nd:YAG crystal.

Optionally, flat Nd:YAG crystal 1210 is a prism. Optionally, flat Nd:YAG crystal 1210 is a right prism. Optionally, flat Nd:YAG crystal 1210 is a right rectangular prism. Any one or more of the aforementioned surfaces of flat Nd:YAG crystal 1210 may be facets. In the example of FIG. 7, the thickness of flat Nd:YAG crystal 1210 is substantially constant, and is denoted "H". In the example of FIG. 7, the internal reflections within flat Nd:YAG crystal 1210 are reflected only from first side surface 1222 and from second side surface 1224, but this is not necessarily so, and light may be internally reflected from any surface of flat Nd:YAG crystal 1210 before being emitted as the outgoing laser light.

In addition to flat Nd:YAG crystal 1210, GM amplifier 1200 may also optionally include optional pump light source 1220, which emits the pump light that has at least the first frequency. Optional pump light source 1220 may be implemented as suitable type of light source, such as LED, vertical-cavity surface-emitting laser (VCSEL), other types of lasers, and so on.

It is noted that utilization of VCSEL as a pump light source (which is made feasible by the disclosed novel geometrical format of the flat Nd:YAG crystal 1210) may be used for reducing the cost of the crystal amplifier when compared to prior art solutions, as well as facilitating easier and high-volume manufacturing when compared to prior art solutions.

The disclosed novel geometry in which pump light is provided over a large top surface means that the light source may have a relatively low brightness per area.

Optionally, GM amplifier 1200 is operated in a low duty cycle (e.g., below 3%, between 3%-5%, between 5%-10%), so as to allow GM amplifier 1200 to cool down (which is facilitated by the relative thinness of GM amplifier 1200). Optionally, GM amplifier 1200 may include cooling module 1260 (whether an active cooling module or a passive cooling module which may be connected to a heat sink) for cooling down flat Nd:YAG crystal 1210, or any other part of GM amplifier 1200. Optionally, a surface of cooling module 1260 may touch a corresponding surface of flat Nd:YAG crystal 1210 (e.g., bottom surface 1214, as illustrated, or any other surface of the crystal). The relative thinness of flat Nd:YAG crystal 1210 also enables doping of the crystal in relatively high doping density (e.g., above 1%, between 1-2%, between 2-3%).

Optionally, GM amplifier 1200 may be a side pumped GM amplifier which is activated in a multimode mode, with optionally tens of different modes of the illumination.

Referring to GM amplifier 1200 in its entirety, better extraction efficiency may be achieved in GM amplifier 1200 by the combination of ceramic Nd:YAG crystal and multipass of light within it (which extends the effective path).

Optionally, a doping concentration of the Neodymium within the flat Nd:YAG crystal is lower than 4%. Optionally, a doping concentration of the Neodymium within the flat Nd:YAG crystal is between 1% and 2%. Optionally, the top surface is coated with anti-reflective coating for at least one frequency out of: the first frequency, the second frequency, and the emitted light frequency.

Optionally, the top surface is coated with anti-reflective coating for at least two frequencies out of: the first frequency, the second frequency, and the emitted light frequency. Optionally, at least one of the first side surface and the second side surface is coated with anti-reflective coating for at least one frequency out of: the first frequency, the second frequency, and the emitted light frequency.

Optionally, at least one of the first side surface and the second side surface is coated with anti-reflective coating for at least two frequencies out of: the first frequency, the second frequency, and the emitted light frequency. Optionally, the at least one of the first side surface and the second side surface is further coated with anti-reflective coating for an amplified spontaneous emission (ASE) frequency of the flat Nd:YAG crystal 1210 (e.g., 1,064nm).

Optionally, light entering the flat Nd:YAG crystal via the first side surface is emitted along at least 80% of its optical path before being emitted via the second side surface.

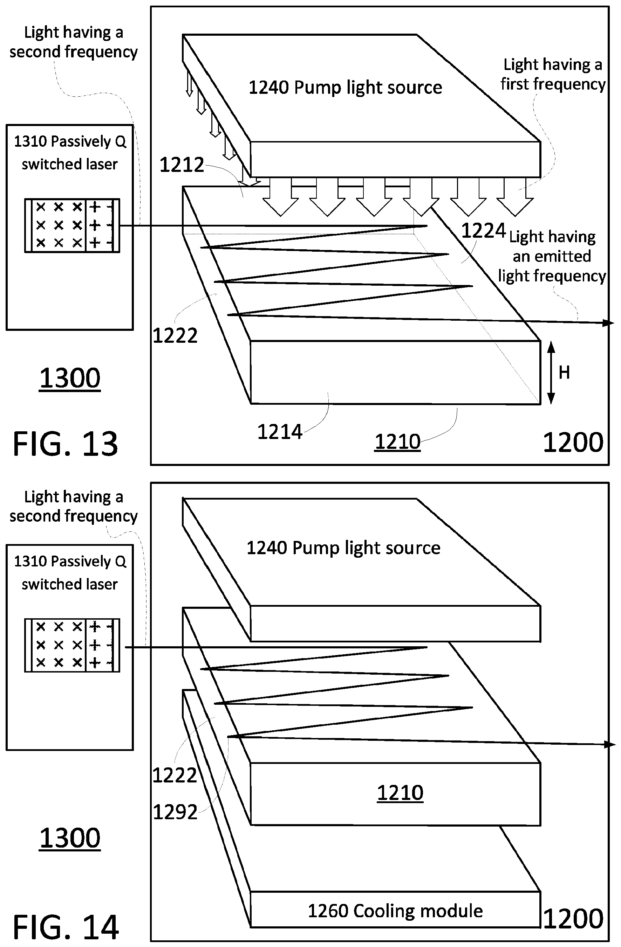

FIGS. 13 and 14 illustrate amplified laser illumination sources 1300, which includes GM amplifier 1200 and a seed laser 1310. Optionally, the seed laser may be an Nd:YAG based laser emitting the light entering the flat Nd:YAG crystal via the first side surface. Optionally, any of the aforementioned lasers (e.g., passively Q-switched lasers 200 and 700) may be used as seed laser 1310.

Optionally, flat Nd:YAG crystal 1210 may be a co-doped crystal in which the YAG crystal (or at least one or more parts thereof) is doped by neodymium and further doped by an additional material. The additional material may be a material which, when doping the YAG crystal, suppresses light in at least one ASE frequency of the flat Nd:YAG crystal 1210. For example, chromium (Cr), and especially chromium ions (e.g., $Cr^{4+}$) may be used to suppress emission at 1,064nm. Further doping the flat Nd:YAG crystal 1210 with chromium may increase the yield of the amplifier. Other materials may also be used (e.g., $Co^{3+}$).

Referring to implementations in which some or all of the side surfaces are not perpendicular to the top surface, it is noted that an angle between a side surface and the top surface (and/or the bottom surface) may be selected which reduces the affect of ASE, and the degree to which ASE will be amplified within the flat Nd:YAG crystal 1210.

While certain features of the disclosure have been illustrated and described herein, many modifications will now occur to those of ordinary skill in the art. It is, therefore, to be understood that such modifications are in accordance with the invention only if they fall within the scope of the appended claims.

It will be appreciated that the embodiments described above are cited by way of example, and various features thereof and combinations of these features can be varied and modified, as long as they fall within the scope of the appended claims.

While various embodiments have been shown and described, it will be understood that there is no intent to limit the disclosure by such disclosure, but rather, it is intended to cover all modifications and alternate constructions falling within the scope of the invention, as defined in the appended claims.

**Claims**

**1.** A passively Q-switched laser (200, 700), comprising:

a gain medium, GM, (210, 710) having a stimulated emission cross section $\sigma_{SE}$;

a saturable absorber, SA, (220, 720) having an absorption cross section ($\sigma_a$) which is less than three times the $\sigma_{SE}$ of the GM;

an optical resonator within which the GM and the SA are positioned, the optical resonator comprising a high reflectivity mirror (240, 730) and an output coupler (250, 740); and

at least one end-pumping light source (272, 772),

wherein at least one of the high reflectivity mirror and the output coupler comprises a curved mirror, directing light within the optical resonator such that an effective cross-section of a laser mode within the SA ($A_{SA}$) is smaller than a cross-section of a laser mode within a Rayleigh length of a pump beam ($A_{GM}$)

wherein the high reflectivity mirror and the output coupler are rigidly coupled to the GM and to the SA, such that the passively Q-switched laser is a monolithic microchip passively Q-switched laser.

2. The passively Q-switched laser according to claim 1, wherein the GM is made of neodymium-doped yttrium aluminum garnet, Nd:YAG, and wherein the SA is made of cobalt-doped YAG $Co^{2+}$:YAG.

3. The passively Q-switched laser according to claim 1, wherein the GM is made of neodymium-doped yttrium orthovanadate $YVO_4$, and wherein the SA is made of a three-valence vanadium-doped yttrium aluminum garnet, $V^{3+}$:YAG.

4. The passively Q-switched laser according to claim 1, wherein the GM is made of neodymium-doped yttrium orthovanadate $YVO_4$, and wherein the SA is made from cobalt-doped YAG, $Co^{2+}$:YAG.

5. The passively Q-switched laser according to claim 1, wherein the high reflectivity mirror is a concave mirror.

6. The passively Q-switched laser according to claim 1, wherein both the high reflectivity mirror and the output coupler are concave mirrors.

7. The passively Q-switched laser according to claim 6, wherein the curvatures of the concave high reflectivity mirror and of the concave output coupler are such that the highest energy density is within the middle 60% of the optical resonator.

8. The passively Q-switched laser according to claim 1, wherein a diameter of the SA is smaller than a diameter of the GM, and wherein the SA is surrounded by another material for releasing heat from the optical resonator.

9. The passively Q-switched laser according to claim 1, further comprising optics (282, 782) for focusing light of the end-pumping light source into the optical resonator.

10. The passively Q-switched laser according to claim 1, further comprising undoped YAG in addition to the GM and the SA for preventing heat from accumulating in an absorptive region of the GM.

11. The passively Q-switched laser according to claim 1, wherein the GM and the SA are implemented on a single piece of crystalline material doped with neodymium and with at least one other material.

12. The passively Q-switched laser according to claim 1, wherein the passively Q-switched laser emits light through the output coupler within wavelengths range of 1,300nm and 1,500nm.

13. A short wave infrared, SWIR, electro-optical system comprising the passively Q-switched laser according to any one of claims 1-12 and further comprising a SWIR photodetector array sensitive to the wavelength of the passively Q-switched laser for detecting reflections of laser illumination off at least one illuminated object.

14. A short wave infrared, SWIR, electro-optical system comprising the passively Q-switched laser according to any one of claims 1-12 and further comprising a time of flight, ToF, SWIR sensor sensitive to the wavelength of the passively Q-switched laser, a controller operable to synchronize operation of the ToF SWIR sensor and the passively Q-switched laser, and a processor operable to process detection, by the ToF SWIR sensor, of reflections of laser illumination of the passively Q-switched laser, for determining a distance to at least one object in a field of view of the SWIR electrooptical system.

**Patentansprüche**

1. Passiv gütegeschalteter Laser (200, 700), umfassend:

   ein Verstärkungsmedium, GM, (210, 710), das einen stimulierten Emissionsquerschnitt $\sigma_{SE}$ aufweist,
   einen sättigbaren Absorber, SA, (220, 720) mit einem Absorptionsquerschnitt $\sigma_a$, der kleiner als das Dreifache des $\sigma_{SE}$ des GM ist,
   einen optischen Resonator, in dem das GM und der SA positioniert sind, wobei der optische Resonator einen hochreflektierenden Spiegel (240, 730) und einen Auskoppler (250, 740) umfasst, und
   mindestens eine endpumpende Lichtquelle (272, 772),
   wobei mindestens eines von dem hochreflektierenden Spiegel und dem Auskoppler einen gekrümmten Spiegel umfasst, der Licht derart in dem optischen Resonator lenkt, dass ein effektiver Querschnitt einer Lasermode in dem SA ($A_{SA}$) kleiner als ein Querschnitt einer Lasermode in einer Rayleigh-Länge eines Pumpstrahls ($A_{GM}$) ist,
   wobei der hochreflektierende Spiegel und der Auskoppler starr mit dem GM und mit dem SA gekoppelt sind,
   so dass der passiv gütegeschaltete Laser ein monolithischer passiv gütegeschalteter Mikrochiplaser ist.

2. Passiv gütegeschalteter Laser nach Anspruch 1, wobei das GM aus neodymdotiertem Yttrium-Aluminium-Granat, Nd:YAG, besteht und wobei der SA aus kobalt-dotiertem YAG, $Co^{2+}$:YAG, besteht.

3. Passiv gütegeschalteter Laser nach Anspruch 1, wobei das GM aus neodymdotiertem Yttrium-Orthovanadat, $YVO_4$, besteht und wobei der SA aus dreiwertigem vanadium-dotiertem Yttrium-Aluminium-Granat, $V^{3+}$:YAG, besteht.

4. Passiv gütegeschalteter Laser nach Anspruch 1, wobei das GM aus neodymdotiertem Yttrium-Orthovanadat, $YVO_4$, besteht und wobei der SA aus kobalt-dotiertem YAG, $Co^{2+}$:YAG, besteht.

5. Passiv gütegeschalteter Laser nach Anspruch 1, wobei der hochreflektierende Spiegel ein konkaver Spiegel ist.

6. Passiv gütegeschalteter Laser nach Anspruch 1, wobei sowohl der hochreflektierende Spiegel als auch der Auskoppler konkave Spiegel sind.

7. Passiv gütegeschalteter Laser nach Anspruch 6, wobei die Krümmungen des konkaven hochreflektierenden Spiegels und des konkaven Auskopplers derart sind, dass die größte Energiedichte innerhalb der mittleren 60 % des optischen Resonators liegt.

8. Passiv gütegeschalteter Laser nach Anspruch 1, wobei ein Durchmesser des SA kleiner als ein Durchmesser des GM ist und wobei der SA von einem anderen Material umgeben ist, um Wärme von dem optischen Resonator freizusetzen.

9. Passiv gütegeschalteter Laser nach Anspruch 1, ferner Optik (282, 782) zum Fokussieren von Licht der endpumpenden Lichtquelle in den optischen Resonator umfassend.

10. Passiv gütegeschalteter Laser nach Anspruch 1, ferner zusätzlich zu dem GM und dem SA undotiertes YAG umfassend, um das Aufstauen von Wärme in einer absorbierenden Region des GM zu verhindern.

11. Passiv gütegeschalteter Laser nach Anspruch 1, wobei das GM und der SA auf einem einzigen Stück aus kristallinem Material implementiert sind, das mit Neodym und mit mindestens einem weiteren Material dotiert ist.

12. Passiv gütegeschalteter Laser nach Anspruch 1, wobei der passiv gütegeschaltete Laser Licht durch den Auskoppler innerhalb eines Wellenlängenbereichs von 1300 nm und 1500 nm emittiert.

13. Elektrooptisches Kurzwellen-Infrarot-, SWIR-, System, das den passiv gütegeschalteten Laser nach einem der Ansprüche 1 bis 12 und ferner eine SWIR-Fotodetektoranordnung umfasst, die empfindlich für die Wellenlänge des passiv gütegeschalteten Lasers ist, um Reflexionen von Laserbeleuchtung von mindestens einem beleuchteten Objekt zu erkennen.

14. Elektrooptisches Kurzwellen-Infrarot-, SWIR-, System, das den passiv gütegeschalteten Laser nach einem der Ansprüche 1 bis 12 und ferner einen Laufzeit-, ToF-, SWIR-Sensor, der empfindlich für die Wellenlänge des passiv gütegeschalteten Lasers ist, eine Steuerung, die funktionsfähig ist, den Betrieb des ToF-SWIR-Sensors und des passiv gütegeschalteten Lasers zu synchronisieren, und einen Prozessor umfasst, der funktionsfähig ist, die Erkennung von Reflexionen von Laserbeleuchtung des passiv gütegeschalteten Lasers durch den Tof-SWIR-Sensor zu verarbeiten, um eine Entfernung zu mindestens einem Objekt in einem Sichtfeld des elektrooptischen SWIR-Systems zu bestimmen.

## Revendications

1. Laser à déclenchement passif (200, 700) comprenant:

   un milieu de gain, GM, (210, 710) ayant une section transversale d'émission stimulée $\sigma_{SE}$,
   un absorbeur saturable, SA, (220, 720) ayant une section transversale d'absorption $\sigma_a$ qui est inférieure à trois fois la $\sigma_{SE}$ du GM,
   un résonateur optique dans lequel le GM et le SA sont positionnés, le résonateur optique comprenant un miroir hautement réfléchissant (240, 730) et un coupleur de sortie (250, 740), et
   au moins une source de lumière à pompage d'extrémité (272, 772),
   dans lequel au moins l'un du miroir hautement réfléchissant et du coupleur de sortie comprend un miroir incurvé, dirigeant la lumière à l'intérieur du résonateur optique de sorte qu'une section transversale effective d'un mode laser dans le SA ($A_{SA}$) est inférieure à une section transversale d'un mode laser dans une longueur de Rayleigh d'un faisceau de pompage ($A_{GM}$),
   dans lequel le miroir hautement réfléchissant et le coupleur de sortie sont couplés de façon rigide au GM et SA, de sorte que le laser à déclenchement passif est un laser à déclenchement passif à micropuce monolithique.

2. Laser à déclenchement passif selon la revendication 1, dans lequel le GM est constitué de grenat d'yttrium-aluminium dopé au néodyme, Nd:YAG, et dans lequel le SA est constitué de YAG dopé au cobalt, $Co^{2+}$:YAG.

3. Laser à déclenchement passif selon la revendication 1, dans lequel le GM est constitué d'orthovanadate d'yttrium, $YVO_4$, dopé au néodyme et dans lequel le SA est constitué de grenat d'yttrium-aluminium dopé au vanadium trivalent $V^{3+}$:YAG

4. Laser à déclenchement passif selon la revendication 1, dans lequel le GM est constitué d'orthovanadate d'yttrium, $YVO_4$, dopé au néodyme et dans lequel le SA est constitué de YAG dopé au cobalt, $Co^{2+}$:YAG.

5. Laser à déclenchement passif selon la revendication 1, dans lequel le miroir hautement réfléchissant est un miroir concave.

6. Laser à déclenchement passif selon la revendication 1, dans lequel le miroir hautement réfléchissant et le coupleur de sortie sont tous deux des miroirs concaves.

7. Laser à déclenchement passif selon la revendication 6, dans lequel les courbures du miroir concave hautement réfléchissant et du coupleur de sortie concave sont telles que la densité d'énergie la plus élevée se situe dans les 60 % centraux du résonateur optique.

8. Laser à déclenchement passif selon la revendication 1, dans lequel un diamètre du SA est inférieur à un diamètre du GM, et dans lequel le SA est entouré d'un autre matériau pour dégager de la chaleur du résonateur optique.

9. Laser à déclenchement passif selon la revendication 1, comprenant en outre une optique (282, 782) pour focaliser de la lumière de la source de lumière à pompage d'extrémité dans le résonateur optique.

10. Laser à déclenchement passif selon la revendication 1, comprenant en outre du YAG non dopé en plus du GM et du SA pour empêcher la chaleur de s'accumuler dans une région absorbante du GM.

11. Laser à déclenchement passif selon la revendication 1, dans lequel le GM et le SA sont implantés sur une seule pièce de matériau cristallin dopé avec du néodyme et avec au moins un autre matériau.

12. Laser à déclenchement passif selon la revendication 1, où le laser à déclenchement passif émet de la lumière à travers le coupleur de sortie dans une gamme de longueurs d'onde entre 1300 nm et 1 500 nm.

**13.** Système électro-optique d'infrarouge à ondes courtes (SWIR) comprenant le laser à déclenchement passif selon l'une quelconque des revendications 1 à 12 et comprenant en outre un réseau de photodétecteurs SWIR sensible à la longueur d'onde du laser à déclenchement passif pour détecter des réflexions d'un rayonnement laser reflété par au moins un objet éclairé.

**14.** Système électro-optique d'infrarouge à ondes courtes (SWIR) comprenant le laser à déclenchement passif selon l'une quelconque des revendications 1 à 12 et comprenant en outre un capteur SWIR à temps de vol, ToF, sensible à la longueur d'onde du laser à déclenchement passif, un dispositif de commande exploitable pour synchroniser le fonctionnement du capteur SWIR ToF et du laser à déclenchement passif, et un processeur exploitable pour traiter la détection, par le capteur SWIR ToF, de réflexions du rayonnement laser du laser à déclenchement passif, pour déterminer une distance d'au moins un objet dans un champ de vision du système électro-optique SWIR.

FIG. 1

FIG. 2A

FIG. 2B

FIG. 2C

**FIG. 3**

**FIG. 4**

FIG. 5A

FIG. 5B

EP 4 042 528 B1

| 610 | Inserting into a first mold at least one first powder | | 620 | Inserting into the mold at least one second powder |
|---|---|---|---|---|
| 630 | Compacting the at least one first powder in the first mold to yield a first green body | | 640 | Compacting the at least one second powder in the second mold to yield a first green body |
| 650 | Heating the first green body to yield a first crystalline material | | 660 | Heating the second green body to yield a second crystalline material |

| 670 | coupling the second crystalline material to the first crystalline material |
|---|---|

600

FIG. 6A

## FIG. 6B

Different molds

First green body and
second green body
are sintered
separately and later
coupled

Saturable
absorber  (610) (630) (650)

Gain
medium  (620) (640) (660)

Bonding  (670)

Time

Different molds

First green body and
second green body
are compressed
separately, but
heated together

Saturable
absorber  (610)  (630)  (650)

Gain
medium  (620)  (640)  (660)

Bonding  (670)

Time

Different molds

First green body and
second green body
are compressed
separately, heated
separately initially,
and then complete
the sintering together

Saturable
absorber  (610) (630)  (650)ooooo(650)

Gain
medium  (620) (640)  (660)oo(660)

Bonding  (670)

Time

FIG. 6C

25

FIG. 7A

SWIR optical system 800

Passively Q switched laser 700 — A_GM — A_SA

HR mirror 730 | GM 710 | SA 720 | OC 740

Laser mode 750 — Pumping illumination 760 — Waist 762

FIG. 7B

SWIR optical system 800

Passively Q switched laser 700 — A_GM — YAG — A_SA

HR mirror 730 | GM 710 | SA 720 | YAG | OC 740

Laser mode 750 — Pumping illumination 760 — Waist 762

FIG. 7C

SWIR optical system 800

Passively Q switched laser 700 — A_GM — A_SA

730 | 710 | YAG | 720 | 740

Laser mode 750 — Pumping illumination 760 — Waist 762

FIG. 8A

SWIR optical system 800

Passively Q switched laser 700

$A_{GM}$   $A_{SA}$

HR mirror 730   GM 710   SA 720   OC 740

Laser mode 750   Pumping illumination 760   Waist 762

FIG. 8B

SWIR optical system 800

Passively Q switched laser 700

$A_{GM}$   $A_{SA}$   YAG

HR mirror 730   GM 710   Waist 762   SA 720   OC 740

Laser mode 750   Pumping illumination 760

FIG. 8C

SWIR optical system 800

YAG   Passively Q switched laser 700

Waist 762   710   720   710   $A_{SA}$

$A_{GM}$

HR mirror 730   YAG   SA 720   OC 740

Laser mode 750   Pumping illumination 760

**FIG. 9A**

SWIR optical system 800

Passively Q switched laser 700

772

782 Focusing Optics

730  710  720  740

**FIG. 9B**

SWIR optical system 800

774 Flashlamp

$A_{GM}$

$A_{SA}$  YAG  700

730  710  720  740  784

FIG. 10A

FIG. 10B

Light having a
second frequency

Light having a
first frequency

1240 Pump light source

1212

1310
Seed Laser

1224 Light having
an emitted
light frequency

1222

H

1214    1210    1200

FIG. 11

1240 Pump light source

1310
Seed Laser

1222

1210

1300

1292

1260 Cooling module    1200

FIG. 12

Light having a
second frequency

1310 Passively Q
switched laser

1240 Pump light source

Light having a
first frequency

1212

1224 Light having
an emitted
light frequency

1222

H

1214    1210    1200

1300

# FIG. 13

Light having a
second frequency

1310 Passively Q
switched laser

1240 Pump light source

1222

1210

1292

1260 Cooling module    1200

1300

# FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63075426
- US 63112416 B
- US 63213419 B
- US 5802083 A
- US 6023479 A
- US 5832010 A

**Non-patent literature cited in the description**

- ER:CA5(PO4)3F SATURABLE-ABSORBER Q SWITCH FOR THE ER:GLASS LASER AT 1.53 UM. **SPARIOSU K et al.** APPLIED PHYSICS LETTERS. AMERICAN INSTITUTE OF PHYSICS, 31 May 1993, vol. 62, 2763-2765
- Co2+:LMA crystal as saturable absorber for a diode-pumped passively Q-switched Nd:YVO4 laser at 1342 nm. **HUANG H T et al.** APPLIED PHYSICS B ; LASERS AND OPTICS. SPRINGER, 07 October 2007, vol. 89, 319-321
- **LI P. et al.** Directly LD-pumped passively Q-switched YVO4-Nd:YVO4 laser at 1.34 $\mu$m with a V3+: YAG saturable absorber. *LASER PHYSICS,* 02 September 2010, vol. 20, 1861-1864
- **XU J.-L. et al.** Dual-wavelength oscillation at 1064 and 1342 nm in a passively Q-switched Nd:YVO4 laser with V3+:YAG as saturable absorber. *Applied Physics B,* 06 November 2010, vol. 103 (1), 75-82
- PASSIVELY Q-SWITCHED ND:YVO4 LASER WITH A CR4+:YAG CRYSTAL SATURABLE ABSORBER. **BAI Y et al.** APPLIED OPTICS. OPTICAL SOCIETY OF AMERICA, 20 April 1997, vol. 36, 2468-2472